# EUROPEAN PATENT APPLICATION

(11) **EP 4 603 970 A1**
(43) Date of publication of application: **20.08.2025**
(21) Application number: 23932820.6
(22) Date of filing: 06.12.2023
(51) Int. Cl.: G06F 9/4401

(54) **WINDOW ANIMATION PROCESSING METHOD AND ELECTRONIC DEVICE**

(30) Priority: 14.04.2023 CN 202310430743
(71) Applicant: Honor Device Co., Ltd., Shenzhen, Guangdong 518040 (CN)
(72) Inventor: LI, Fei, Shenzhen, Guangdong 518040 (CN); QIAN, Shen, Shenzhen, Guangdong 518040 (CN); LI, Deng, Shenzhen, Guangdong 518040 (CN)
(74) Representative: Goddar, Heinz J.
(86) International application number: PCT/CN2023/136886
(87) International publication number: WO 2024/212549

(57) **Abstract**

This application provides a window animation processing method and an electronic device, and relates to the field of terminal technologies. **In** this solution, a frame loss probability in a window animation implementation process can be reduced. A specific solution is as follows: A first program in the electronic device sends first data to an image composer after detecting a first operation. The first data includes a plurality of groups of animation parameters used to compose a first animation, the first animation includes a plurality of image frames, and the first operation is detected by the first program and is used to trigger display of the first animation. A display screen of the electronic device sequentially displays the image frames of the first animation after the image composer receives the first data.

## Description

This application claims priority to Chinese Patent Application No. 202310430743.1, filed with the China National Intellectual Property Administration on April 14, 2023 and entitled "WINDOW ANIMATION PROCESSING METHOD AND ELECTRONIC DEVICE", which is incorporated herein by reference in its entirety.

### TECHNICAL FIELD

This application relates to the field of terminal technologies, and in particular, to a window animation processing method and an electronic device.

### BACKGROUND

Whether content displayed by an electronic device is visually coherent to a user is an important indicator for measuring human-computer interaction efficiency of the electronic device. In some scenarios, an electronic device usually uses a window animation for a transition in switching between different interfaces. In this way, it is ensured that an interface switching process is visually coherent to the user.

In a related technology, in a window animation implementation process, a frame loss easily occurs, and consequently, the window animation is visually incoherent to the user.

### SUMMARY

In view of this, this application provides a window animation processing method and an electronic device, to reduce a frame loss probability of a window animation, ensure coherence of displaying the window animation, and improve human-computer interaction efficiency of the electronic device.

To achieve the foregoing objectives, the following technical solutions are used in embodiments of this application:

According to a first aspect, an embodiment of this application provides a window animation processing method, applied to an electronic device. The method includes: A first program in the electronic device sends first data to an image composer after detecting a first operation. The first data includes a plurality of groups of animation parameters used to compose a first animation, the first animation includes a plurality of image frames, and the first operation is detected by the first program and is used to trigger display of the first animation. A display screen of the electronic device sequentially displays the image frames of the first animation after the image composer receives the first data.

For example, the first operation may be an operation that can trigger display of the first animation. For example, the first operation may be an operation that indicates interface switching. It may be understood that, in an interface switching process, an animation special effect is usually used to for a transition in interface switching, to ensure that the interface switching process is visually coherent to a user.

For another example, the first operation may alternatively be an operation that indicates to display the first animation. For example, the first operation may alternatively be an operation that directly indicates to play back a window animation sample.

In addition, the first program may be a software module that detects the first operation and decides that the first animation needs to be displayed, for example, may be an application program or a window manager. After the first program detects the first operation, the first program may send data to the image composer for one time, that is, send a plurality of groups of animation parameters used to compose the first animation.

It may be understood that, before each image frame is displayed, the image composer needs to process drawn display content based on the animation parameter, to obtain a corresponding image frame.

In the foregoing embodiment, before the image composer composes the first animation, the image composer can independently compose each image frame of the first animation by exchanging data with the first program for one time (that is, obtaining the first data from the first program). In other words, the image composer does not need to repeatedly exchange data with the first program in a process of composing the first animation. The first program is decoupled in an image frame composition phase. In other words, after the first program completes sending of the first data to the image composer, even if the first program is abnormal or busy, the first animation does not lose a frame.

In some embodiments, the first data includes r groups of animation parameters, and each group of animation parameters is used to compose one image frame of the first animation. Herein, r is a positive integer.

For example, r is greater than 1 and less than a total quantity i of frames of the first animation. In this way, the first program may send the first data to the image composer for a plurality of times. After sending the first data to the image composer for a first time, the first program continues to determine a plurality of groups of animation parameters that need to be sent to the image composer for a next time. Animation parameters carried in first data sent at all times may be different. For example, in an animation parameter calculation process, if the first program is busy, sent first data may include a small quantity of animation parameters. In the animation parameter calculation process, if the first program is relatively idle, sent first data may include a relatively large quantity of animation parameters. In this way, impact of the first program on subsequent composition of the first animation can also be reduced.

For another example, r is equal to the total quantity i of frames of the first animation. In this way, the first program only needs to send the first data to the image composer, so that the first program can be decoupled from the image composer in the process of composing the first animation, to avoid impact of the first program on the process of composing the first animation.

In some embodiments, before the first program sends the first data to the image composer, the method further includes: The first program determines a first quantity of frames of the first animation. The first program determines the plurality of groups of animation parameters of the first data. A quantity of the plurality of groups of animation parameters is the same as the first quantity of frames, and one group of the animation parameters is used to compose one image frame of the first animation.

In the foregoing embodiment, before the first animation is actually displayed, the total quantity of frames (namely, the first quantity of frames) of the first animation is determined in advance. Then, all animation parameters of the first animation are determined at one time based on an animation effect. In this manner, the first program no longer relies on a position and a size of an actually displayed image frame to calculate an animation parameter of a next image frame, to pave the way for decoupling of the first program and the image composer in the subsequent process of composing the first animation.

In some embodiments, before the electronic device determines the first quantity of frames of the first animation, the method further includes: The first program determines a first refresh rate. The first refresh rate is a predicted display screen refresh rate during playing of the first animation. The determining a first quantity of frames of the first animation includes: The first program determines that the first quantity of frames is equal to a product of the first refresh rate and playing duration of the first animation.

It may be understood that, the display screen refresh rate may change with a running scenario. In the foregoing embodiment, the display screen refresh rate during display of the first animation is predicted, to ensure that an animation frame rate of the first animation is consistent with the display screen refresh rate. In this way, an optimal first quantity of frames may be obtained. Certainly, the first quantity of frames is a key parameter for determining all the animation parameters of the first animation, and the optimal first quantity of frames is determined, to ensure smoothness of the first animation without increasing display duration of the first animation.

In some embodiments, a display screen refresh rate of the electronic device is fixed at the first refresh rate in a period in which the electronic device sequentially displays all the image frames corresponding to the first animation.

It may be understood that, even if the display screen refresh rate during playing of the first animation is accurately predicted, some unexpected factors may cause a refresh rate change in a process of actually playing back the first animation. To ensure an actual playing effect of the first animation, the display screen refresh rate may be fixed at the first refresh rate during playing of the first animation.

In some embodiments, the first data includes a first animation parameter, a second animation parameter, and a third animation parameter that are sorted sequentially, and after the image composer receives the first data, the method further includes: The image composer receives a first vertical synchronization signal. The image composer processes drawn first content based on the first animation parameter in response to the first vertical synchronization signal, to obtain a first image frame of the first animation. The image composer receives a second vertical synchronization signal. The second vertical synchronization signal is a next frame of vertical synchronization signal received by the image composer after the first vertical synchronization signal. When a first time interval is equal to first duration, the image composer processes drawn second content based on the second animation parameter in response to the second vertical synchronization signal, to obtain a second image frame of the first animation. The first time interval is a time interval between a moment at which the first vertical synchronization signal is received and a moment at which the second vertical synchronization signal is received, and the first duration is fixed duration, and is used to indicate a sending frequency of the vertical synchronization signal. That the electronic device sequentially displays the image frames of the first animation further includes: displaying the first image frame after the first image frame is obtained; and displaying the second image frame after the second image frame is obtained. When the first time interval is greater than the first duration, the image composer processes drawn third content based on the third animation parameter in response to the second vertical synchronization signal, to obtain a third image frame of the first animation. That the electronic device sequentially displays the image frames of the first animation further includes: displaying the first image frame after the first image frame is obtained; and after the third image frame is obtained, skipping the second image frame and directly displaying the third image frame.

The first image frame, the second image frame, and the third image frame that correspond to the first animation parameter, the second animation parameter, and the third animation parameter are image frames that need to be sequentially displayed in the first animation.

It may be understood that, in a process of running the image composer, the image composer may be inevitably abnormal or busy. In the foregoing embodiment, the image composer may decide, based on a receiving time interval between two adjacent frames of synchronization signals and an actual sending time interval between the synchronization signals, whether to discard a frame to ensure that a composition progress of the first animation is not affected.

For example, the first time interval is equal to the first duration (the actual sending time interval between the synchronization signals). After the first image frame is composed, the second image frame is composed in sequence. In this way, the electronic device may also display the second image frame after displaying the first image frame. For another example, the first time interval is greater than the first duration. After the first image frame is composed, composition of the second image frame is skipped, and the third image frame is directly composed. Correspondingly, the electronic device also skips display of the second image frame, and directly displays the third image frame. In this way, a composition and display time of the second image frame is reduced, to ensure that total display duration of the first animation is not affected, and impact on display of the corresponding first animation when the image composer is abnormal or busy is reduced.

In some embodiments, not only an animation parameter but also drawn display content is required in an image frame composition process of the first animation. When display content of the first animation is unchanged, before sending the first data, the first program may complete drawing of the display content, and store the drawn display content at a first address. Then, the first address and the first data are sent to the image composer. In this way, when composing the image frame, the image composer can complete composition of the first animation only by obtaining the drawn display content from the first address and then composing the drawn display content with the first data.

When the display content of the first animation changes, the first program may draw changed display content in real time, and store the drawn changed display content at a second address. Then, the second address is sent to the image composer. Then, the image composer may obtain the drawn display content from the second address, and compose a subsequent image frame in combination with the first data. In this way, the displayed first animation may be an animation with variable display content.

In some embodiments, in a period in which the display screen of the electronic device sequentially displays the image frames of the first animation, the method further includes: The display screen of the electronic device cancels display of the first animation in response to a second operation of a user. The second operation is an operation of triggering canceling of display of the first animation. The display screen of the electronic device displays a preconfigured end image frame.

In the foregoing embodiment, the electronic device may further quickly cancel the first animation.

In some embodiments, before the electronic device displays the preconfigured end image frame, the method further includes: The first program sends second data to the image composer. The second data is an animation parameter used to compose the end image frame.

In some embodiments, in a period in which the display screen of the electronic device sequentially displays the image frames of the first animation, the method further includes: The display screen of the electronic device cancels display of the first animation after a second operation of a user is detected. The second operation is an operation of triggering canceling of display of the first animation. The display screen of the electronic device displays a second animation. Before display of the first animation is canceled, when a first image frame, a second image frame, and a third image frame of the first animation are sequentially displayed, the second animation includes the third image frame, the second image frame, and the first image frame that need to be sequentially displayed.

In the foregoing embodiment, a process of canceling the first animation is also visually coherent to the user, to improve human-computer interaction efficiency.

In some embodiments, before the display screen of the electronic device displays the second animation, the method further includes: The image composer of the electronic device receives third data from the first program. The third data includes a plurality of groups of animation parameters used to compose the second animation.

In some embodiments, the third data further includes a check parameter, the check parameter is the same as at least one group of animation parameters in the first data, and before the display screen of the electronic device cancels display of the first animation, the method further includes: The image composer determines that a fourth image frame is composed. The fourth image frame is an image frame composed based on a fourth animation parameter in the first data, and the fourth animation parameter includes an animation parameter the same as the check parameter.

In the foregoing embodiment, a process of a transition between the first animation and the second animation is smoother.

In some embodiments, the animation parameters include one or a combination of a parameter indicating a display position, a parameter indicating a display size, and a parameter indicating a display contour.

In some embodiments, the method further includes: A second program of the electronic device sends fourth data to the image composer after detecting a third operation. The fourth data is an animation parameter used to compose a fifth image frame. The display screen of the electronic device displays the fifth image frame after the image composer receives the fourth data from the second program. The second program of the electronic device sends fifth data to the image composer. The fifth data is an animation parameter used to compose a sixth image frame. The display screen of the electronic device displays the sixth image frame after the image composer receives the fifth data from the second program. The fifth image frame and the sixth image frame are two image frames of a third animation, and the third operation is an operation that is detected by the second program and that is used to trigger display of the third animation.

In the foregoing embodiment, different programs may select different animation composition manners based on service rules of the different programs, to implement compatibility of different animation composition manners.

In some embodiments, the second program is a program that meets a first preset condition, and the first program is a program that meets a second preset condition. The first preset condition includes one or more of the following: the second program belongs to a preconfigured first program list, a type that is of the third animation and that the second program indicates to display belongs to a first animation type list, and a quantity of to-be-executed tasks corresponding to the second program is less than a first quantity.

The second preset condition includes one or more of the following: the first program belongs to a preconfigured second program list, a type that is of the first animation and that the first program indicates to display belongs to a second animation type list, a quantity of to-be-executed tasks corresponding to the first program is greater than a second quantity, and the first quantity is less than the second data.

According to a second aspect, an embodiment of this application provides an electronic device. The electronic device includes one or more processors and a memory. The memory is coupled to the processor. The memory is configured to store computer program code, and the computer program code includes computer instructions. When the one or more processors execute the computer instructions, the one or more processors are configured to perform the method according to the first aspect and the possible embodiments of the first aspect.

According to a third aspect, an embodiment of this application provides a computer storage medium, including computer instructions. When the computer instructions are run on an electronic device, the electronic device is enabled to perform the method according to the first aspect and the possible embodiments of the first aspect.

According to a fourth aspect, this application provides a computer program product. When the computer program product is run on the foregoing electronic device, the electronic device is enabled to perform the method according to the first aspect and the possible embodiments of the first aspect.

It may be understood that the electronic device, the computer storage medium, and the computer program product provided in the foregoing aspects are all applied to the corresponding method provided above. Therefore, for beneficial effects that can be achieved by the electronic device, the computer storage medium, and the computer program product, refer to the beneficial effects in the corresponding method provided above. Details are not described herein again.

### BRIEF DESCRIPTION OF DRAWINGS

FIG. 1 is a schematic structural diagram of an electronic device according to an embodiment of this application;
FIG. 2 is a schematic diagram of a software structure of an electronic device according to an embodiment of this application;
FIG. 3 is an example diagram of data exchange between a plurality of layers of a software structure in a window animation implementation process according to an embodiment of this application;
FIG. 4 is an example diagram of an attribute parameter according to an embodiment of this application;
FIG. 5 is an example diagram of a window animation display process according to an embodiment of this application;
FIG. 6 is an execution timing diagram 1 of a window animation processing method;
FIG. 7A and FIG. 7B are an execution timing diagram 2 of a window animation processing method;
FIG. 8A and FIG. 8B are a flowchart of steps of a window animation processing method according to an embodiment of this application;
FIG. 9A and FIG. 9B are an execution timing diagram 1 of the method shown in FIG. 8A and FIG. 8B;
FIG. 10 is an execution timing diagram 2 of the method shown in FIG. 8A and FIG. 8B;
FIG. 11 is an example diagram of a first display process of canceling a window animation according to an embodiment of this application;
FIG. 12 is an execution timing diagram of canceling a window animation shown in FIG. 11;
FIG. 13 is a first part of an example diagram of a second display process of canceling a window animation according to an embodiment of this application;
FIG. 14 is an execution timing diagram of canceling a window animation shown in FIG. 13;
FIG. 15 is an example diagram of an attribute parameter set of a continuous animation according to an embodiment of this application;
FIG. 16 is a second part of an example diagram of a second display process of canceling a window animation according to an embodiment of this application;
FIG. 17 is an execution timing diagram of canceling a window animation shown in FIG. 16 according to an embodiment of this application;
FIG. 18 is an example diagram of engineering implementations of different window animation implementations according to an embodiment of this application; and
FIG. 19 is an example diagram in which different window animation implementations are compatible according to an embodiment of this application.

### DESCRIPTION OF EMBODIMENTS

The following describes technical solutions in embodiments of this application with reference to the accompanying drawings in the embodiments of this application. In the description of this application, unless otherwise specified, "at least one" means one or more, and "plurality" means two or more. In addition, for ease of clearly describing the technical solutions in the embodiments of this application, in the embodiments of this application, words such as "first" and "second" are used to distinguish same items or similar items whose functions and roles are basically the same. A person skilled in the art may understand that the words such as "first" and "second" do not limit a quantity or an execution sequence, and the words such as "first" and "second" do not indicate a definite difference.

A window animation is a visual special effect commonly used in a running process of an electronic device, and may be used for a transition of a display content change of the electronic device.

For example, the display content change may be switching between application interfaces displayed by the electronic device. For example, during display of a home screen, in response to an operation that a user indicates the foreground to run an application program 1, the home screen switches to display an application interface 1 provided by the application program 1. In this example, the electronic device may use the window animation for a transition in switching between application interfaces of different application programs.

For another example, during display of the application interface 1, in response to an operation that the user indicates to switch to display an application interface 2, the application interface 1 switches to display the application interface 2. The application interface 2 is also an application interface provided by the application program 1. In this example, the electronic device may use the window animation for a transition in switching between application interfaces of a same application program.

In addition, a plurality of types of window animations may be selected. For example, in a scale window animation, animation frames are scaled up one by one, or are scaled down one by one. For another example, in a panning window animation, an animation frame remains unchanged, and a display position moves in a horizontal direction.

It can be learned that by using the window animation, the electronic device can ensure visual coherence of an application interface change to the user, to improve human-computer interaction efficiency.

However, in an actual window animation application process, duration in which the window animation needs to be presented is relatively short. Once the window animation is unsmooth, presentation duration of the window animation is prolonged, and visual impact on the user is obvious.

To alleviate the foregoing problem, an embodiment of this application provides a window animation processing method. The method may be applied to an electronic device including a display screen (for example, a touchscreen). According to this method, a probability that stuttering, unsmoothness, and the like occur during display of a window animation can be reduced, to improve visual experience of a user.

For example, the electronic device in this embodiment of this application may be a device including a display screen, for example, a mobile phone, a tablet computer, a smartwatch, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), or an augmented reality (augmented reality, AR)/virtual reality (virtual reality, VR) device. A specific form of the electronic device is not specifically limited in this embodiment of this application.

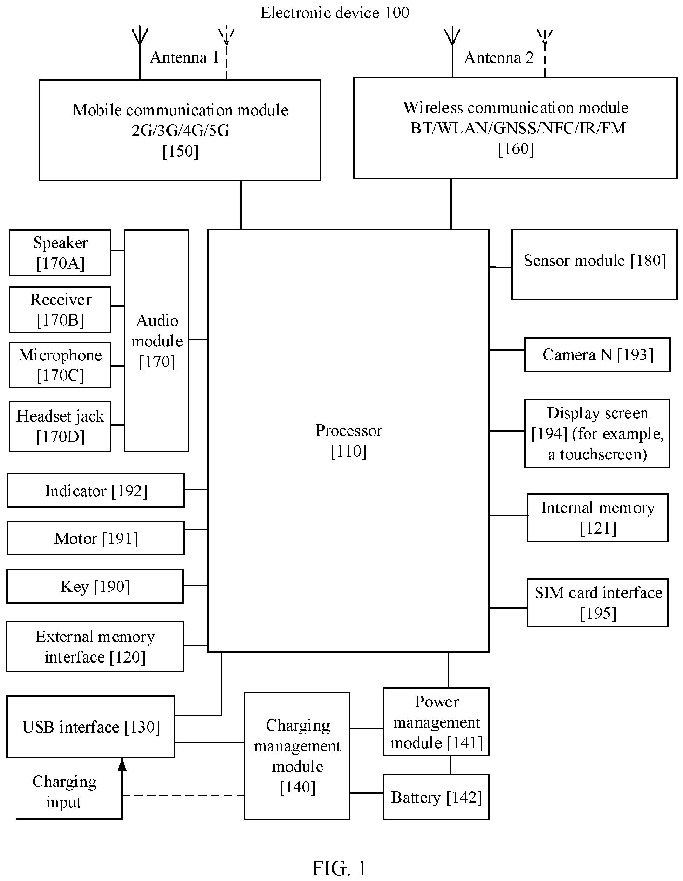

FIG. 1 is a schematic diagram of a structure of an electronic device 100 according to an embodiment of this application. As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, a subscriber identity module (subscriber identification module, SIM) card interface 195, and the like.

The sensor module 180 may include sensors such as a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, and a bone conduction sensor.

It can be understood that a structure shown in this embodiment does not constitute a specific limitation on the electronic device 100. In some other embodiments, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a neural center and a command center of the electronic device 100. The controller may generate an operation control signal based on an instruction operation code and a timing signal, to complete control of instruction fetching and instruction execution.

A memory may be further disposed in the processor 110 to store instructions and data. In some embodiments, the memory in the processor 110 is a cache memory. The memory may store instructions or data recently used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules illustrated in this embodiment is merely an example for description, and does not constitute a limitation on the structure of the electronic device 100. In some other embodiments, the electronic device 100 may alternatively use an interface connection manner different from that in the foregoing embodiment, or use a combination of a plurality of interface connection manners.

The electronic device 100 may implement a display function through the GPU, the display screen 194, the application processor, and the like. The GPU is a microprocessor for image processing and connects the display screen 194 and the application processor. The GPU is configured to perform mathematical and geometric computing for graphics rendering. The processor 110 may include one or more GPUs that execute program instructions to generate or change display information.

The display screen 194 is configured to display an image, a video, or the like. The display screen 194 includes a display panel. The display panel may be a liquid crystal display (liquid crystal display, LCD), an organic light-emitting diode (organic light-emitting diode, OLED), an active-matrix organic light emitting diode or active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like.

The electronic device 100 may implement a photographing function by using the ISP, the camera 193, the video codec, the GPU, the display screen 194, the application processor, and the like.

The ISP is configured to process data fed back by the camera 193. For example, during photographing, a shutter is opened, light is transmitted to a photosensitive element (image sensor) of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scene. In some embodiments, the ISP may be disposed in the camera 193.

The camera 193 is configured to capture a still image or a video. An optical image of an object is generated through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include N cameras 193, where N is a positive integer greater than 1.

The digital signal processor is configured to process a digital signal, and may process another digital signal in addition to a digital image signal. For example, when the electronic device 100 selects a frequency, the digital signal processor is configured to perform Fourier transform, and the like on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG) 1, MPEG2, MPEG3, and MPEG4.

The NPU is a neural-network (neural-network, NN) computing processor, quickly processes input information by referring to a biological neural network structure, for example, by referring to a transmission mode between human brain neurons, and may further perform self-learning continuously. Applications such as intelligent cognition of the electronic device 100, for example, image recognition, facial recognition, voice recognition, and text understanding, may be implemented by using the NPU.

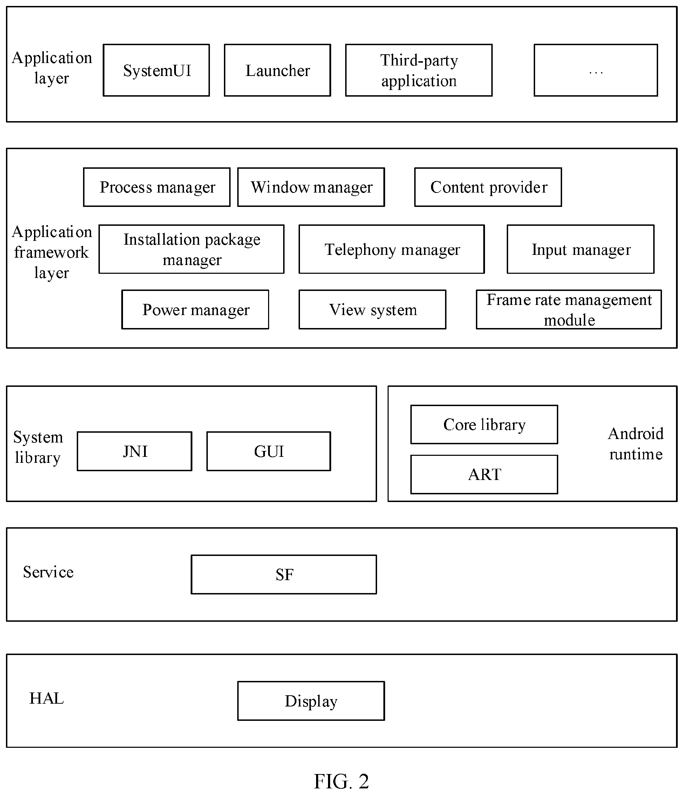

FIG. 2 is a block diagram of a software structure of an electronic device 100 according to an embodiment of this application. In a layered architecture, software may be divided into several layers, and each layer has a clear role and task. The layers communicate with each other through software interfaces. In some embodiments, the electronic device may include an application program layer (briefly referred to as an application layer), an application framework layer (framework), a system library (libraries), Android^{™} runtime (Android Runtime), a service layer (services), a hardware abstract layer (hardware abstract layer, HAL) layer, and the like.

For example, the application layer may include a series of application programs.

For example, the application layer may include system-level application programs such as SystemUI and Launcher.

SystemUI is an application program that provides a user with a service such as system-level information display and exchange, and is mainly configured to implement status bar information display (for example, icon display of a battery, a wifi signal, 3G/4G, and the like), a notification panel (for example, a system message and a third-party application message), a recent task bar display panel (for example, displaying a recently used application), and the like.

Launcher is an application program that provides the user with a home screen service, and is mainly configured to: display application icons of various application programs, receive an operation performed by the user on the application icon, respond to an operation performed by the user on the application icon, run a corresponding application program, display a multi-task interface, and the like.

For another example, the application layer may include an application-level application program such as a Camera application, a Gallery application, and a Messages application. The application-level application program may include an application program that is installed synchronously when an operating system is installed, or may include a third-party application program downloaded from AppGalley in response to a user operation.

In addition to the application program shown in FIG. 2, the application layer may further include an application program not shown in FIG. 2, for example, a cust (cust) application. This is not specifically limited in this embodiment of this application.

For another example, the application framework layer provides an application programming interface (Application Programming Interface, API) and a programming framework for an application program at the application program layer. The application framework layer includes some predefined functions.

As shown in FIG. 2, the application framework layer may include an activity manager (activity manager), a window manager (window manager), an input event management service (input manager), a content provider (content providers), an installation package manager (package manager), a telephony manager (telephony manager), a power manager (power manager), a view system (view system), and the like. This is not limited in this embodiment of this application.

The window manager carries data and an attribute that are related to an "interface", and is configured to manage a state related to the "interface", that is, configured to manage a graphical user interface (graphical user interface, GUI) resource used on a display screen of the electronic device, for example, configured to manage a window program and dispatch an event. Managing the window program is orderly providing an output to a physical display screen or another display device with assistance of an application service end and the window manager based on a display request of an application program. Dispatching the event is dispatching a user event from a keyboard, a physical key, a touchscreen, a mouse, a track ball (track ball), or the like to a corresponding control or window. Managing the window program may further include: obtaining a size of the display screen, determining whether there is a status bar, locking a screen, capturing a screen, and the like, and being responsible for managing a display manner of an application window, including a window display coordinate size, a window display level, and the like, which may specifically include: creation and destruction of a window, display and hiding of a window, window layout, management of a focus, input method and wallpaper management, and the like.

The content provider is configured to store and obtain data, and enable the data to be accessed by an application program. The data may include a video, an image, audio, calls that are made and answered, a browsing history and a bookmark, a phone book, and the like. The view system may be used to construct a display interface of an application program. Each display interface may include one or more controls. Usually, the control may include interface elements such as an icon, a key, a menu, a tab, a text box, a dialog box, a status bar, a navigation bar, and a widget (Widget).

The activity manager is responsible for managing an Activity and is responsible for work such as starting, switching, and scheduling of components in the system, and management and scheduling of application programs.

In this embodiment of this application, the application framework layer may further include a frame rate management module. Certainly, in another possible embodiment, the frame rate management module may also be at the service layer. This is not specifically limited in this embodiment of this application.

For another example, the system library provides capabilities such as basic rendering, communication, data management, and application program running keys. The system library may include a plurality of functional modules such as a Java native interface (java native interface, JNI) and a graphical user interface (graphical user interface, GUI).

The GUI is an independent software module, and is configured to assist another software module to communicate with an image composer (surface flinger, SF) of the service layer.

The JNI is a programming framework, so that a Java program in a Java virtual machine may invoke a local application/or a library, or may be invoked by another program.

Certainly, in addition to the GUI and the JNI shown in FIG. 2, the system library may further include modules not shown in FIG. 2 such as a three-dimensional graphics processing library (for example, an OpenGL ES), an SQLite, a WebKit, and a 2D vector graphics processing function library (Skia).

For another example, the Android runtime includes a core library and a virtual machine. The Android runtime is responsible for scheduling and managing an Android system.

The core library includes two parts: One part is a functional function that needs to be invoked by a java language, and the other part is a core library of Android.

The application program layer and the application framework layer run in the virtual machine. The virtual machine executes java files at the application program layer and the application framework layer as binary files. The virtual machine is configured to perform functions such as object lifecycle management, stack management, thread management, security and exception management, and garbage collection.

For still another example, the service layer may provide a native (Native) layer basic service, for example, a graph, a Video, and Audio. The service layer may include an image composer (surface flinger, SF). The SF is a special service, and is configured to: process graphic data, and compose processed graphic data into a corresponding layer. In addition, the SF may further send, to the display screen, a layer at which a graph is drawn, to indicate the display screen to render the layer in an interface.

For still another example, the HAL layer may encapsulate drive programs of various hardware modules (for example, a camera, a sensor, and a display screen), provide an invoked interface to the application framework layer, and shield implementation details of low-layer hardware. As shown in FIG. 2, the HAL layer may include a display. The display is one of interfaces that invoke a display screen driver, and may be configured to implement a display function. Another software module (for example, the SF) may control display content of the display screen by invoking the display.

In some embodiments, in a running process of the electronic device, an application program (for example, Launcher or the third-party application) may decide, based on an actual service scenario, whether to create a window animation. After a decision is made to create the window animation, creation and display of the window animation are controlled. For example, Launcher detects that the user taps an application icon, and determines that the window animation needs to be created. Then, Launcher indicates, by using the window manager, the JNI, the GUI, the SF, and the display, the display screen to display the foregoing animation frame corresponding to the window animation. For a specific implementation process, refer to descriptions in subsequent embodiments. Details are not described herein again.

In some other embodiments, in a running process of the electronic device, the window manager may also decide, based on an actual service scenario, whether to create a window animation. After deciding to create the window animation, the window manager can control creation and display of the window animation. For example, the window manager may indicate, by using the JNI, the GUI, the SF, and the display, the display screen to display an animation frame corresponding to the window animation.

In a subsequent embodiment, a scenario in which Launcher decides to create a window animation is mainly taken as an example.

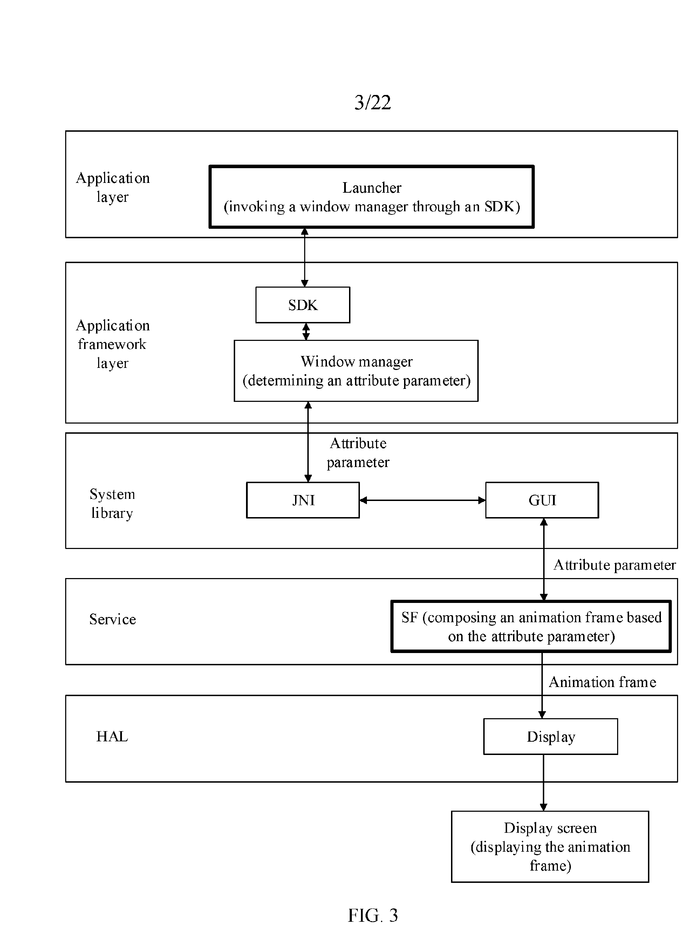

As shown in FIG. 3, in a period in which an electronic device displays a home screen, Launcher detects that a user taps an application icon 1 on the home screen, and Launcher may invoke an interface corresponding to a window manager, to create a window animation by using the window manager. For example, Launcher may invoke the window manager by using a software development kit (software development kit, SDK) at an application framework layer.

For example, creating the window animation includes: creating a corresponding window; and then, determining display content that needs to be controlled by the window. The window is an abstract object that is invisible to the user. The display content is image content of the animation frame mentioned in the foregoing embodiments. After the animation frame is rendered on a display screen, the display content is visible to the user.

It may be understood that the display content may be a still image frame, or may be a dynamic video stream, depending on a specific scenario. In addition, the window controls different display content in different scenarios.

For example, when it is detected that the user taps the application icon 1, if an application program 1 corresponding to the application icon 1 is in an unrunning state, it is determined that the display content corresponding to the window may be an application startup interface or an application home screen of the application program 1.

For another example, when it is detected that the user taps the application icon 1, if an application program 1 corresponding to the application icon 1 is in a background running state, it is determined that the display content corresponding to the window may be a last frame of application interface displayed on the display screen before the application program 1 runs in the background.

For another example, a display interface includes a small window in which live streaming is being played. If an operation that the user taps the small window is detected, it is determined that the display content corresponding to the window may be a live streaming video stream.

In addition, a manner in which the window controls the display content may be: calculating an attribute parameter corresponding to the display content, and indicating an SF to compose, based on the attribute parameter, an animation frame that includes the display content. The attribute parameter may indicate a display position, a display appearance, a display angle, and the like of the animation frame on the display screen.

For example, the attribute parameter may include information such as the display position, a display size, and the display appearance of the animation frame on the display screen. In this case, the window may control the display form (the size, the position, a shape, and the like) of the display content on the display screen. In a subsequent embodiment, the attribute parameter corresponding to the display content may also be referred to as an attribute parameter of the animation frame.

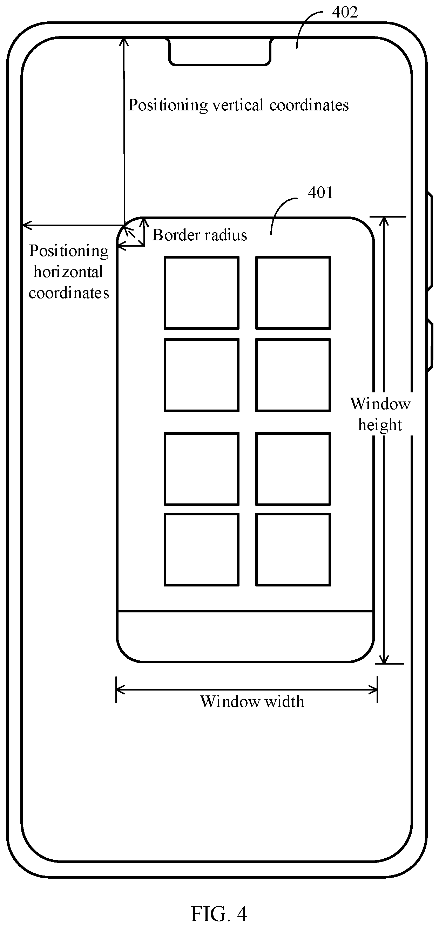

FIG. 4 is taken as an example. Display content corresponding to an animation frame 401 is a Gallery application interface, and positioning vertical coordinates, positioning horizontal coordinates, a border radius, a window height, a window width, and the like that correspond to the animation frame 401 in a display interface 402 are all attribute parameters corresponding to the animation frame 401. It may be understood that the attribute parameter may be a parameter determined by a window before the animation frame 401 is displayed.

After calculating an attribute parameter corresponding to one animation frame, the window manager may send the attribute parameter to an SF by using a JNI and a GUI.

For example, the window manager may send the attribute parameter corresponding to one animation frame to a Launcher, and then the Launcher invokes the JNI to send the attribute parameter to the SF through the GUI. For another example, the window manager may directly invoke the JNI, to send the attribute parameter to the SF through the GUI.

After the attribute parameter is received, the SF may process the corresponding display content based on the attribute parameter, to obtain an animation frame, and then compose the animation frame to a corresponding layer. Then, the SF invokes a display, to indicate a display screen to render a layer that includes the animation frame. In this way, an animation frame, for example, the animation frame 401 in FIG. 4, corresponding to a window animation may be displayed on a display screen of an electronic device.

It may be understood that the window animation may be dynamically changed. To be specific, the display screen displays different animation frames at different moments. For example, in a panning window animation, an animation frame has different display positions on the display screen at different moments. For another example, for a scale window animation, an animation frame has different display sizes and different display positions on the display screen at different moments.

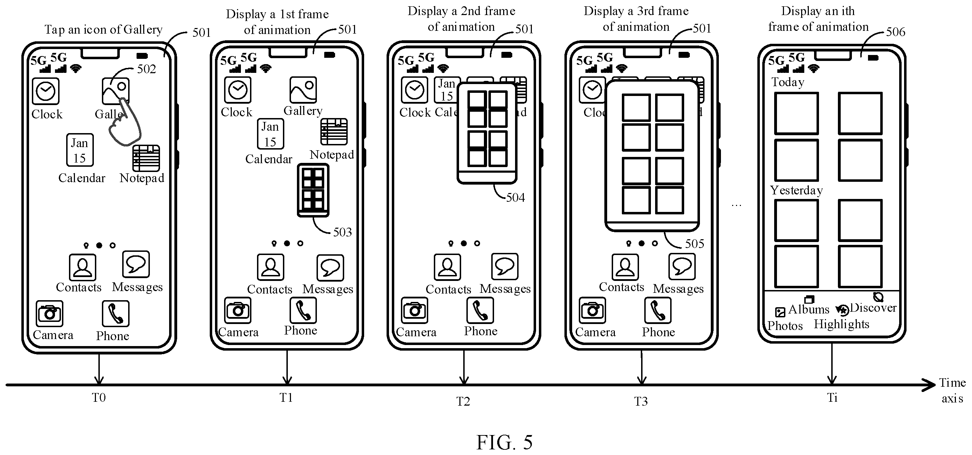

In some embodiments, FIG. 5 shows a process in which an electronic device normally displays a window animation. As shown in FIG. 5, a home screen 501 displayed by the electronic device includes an application icon 502 corresponding to a Gallery application. At a moment T0, a user taps a display area of the application icon 502 on a display screen, that is, taps a Gallery icon. Correspondingly, the electronic device may create and display a corresponding window animation in response to an operation that the user taps the application icon 502. For example, the home screen 501 displays an animation frame 503 with a first size between a moment T1~a moment T2, which may also be referred to as displaying a 1st frame of animation. The home screen 501 displays an animation frame 504 with a second size between the moment T2~a moment T3, which may also be referred to as displaying a 2nd frame of animation. The home screen 501 displays an animation frame 505 with a third size between the moment T3~a moment T4, which may also be referred to as displaying a 3rd frame of animation; and displays an animation frame 506 in full screen after a moment Ti, which may also be referred to as displaying an ith frame of animation.

A value of i is the same as a total quantity of frames of the window animation, and the total quantity of frames of the window animation may be determined based on a display screen refresh rate and duration of the window animation.

For example, an animation frame is updated for one time each time the display screen refreshes, the display screen refresh rate is 60 Hz, the duration of the window animation is 1s, and the total quantity of frames of the window animation may be determined as 60 frames.

In addition, the duration of the window animation may be a preconfigured fixed value, or may be start duration of the Gallery application. This is not specifically limited in this embodiment of this application.

In addition, animation frames displayed at different moments have different sizes. For example, in FIG. 5, a size of a displayed animation frame gradually increases with time, until the displayed animation frame is displayed in full screen. In actual application, a time interval between two adjacent moments is small. In this way, in a time period from the moment T0 to the moment Ti, the electronic device can ensure visual coherence of an interface change to the user.

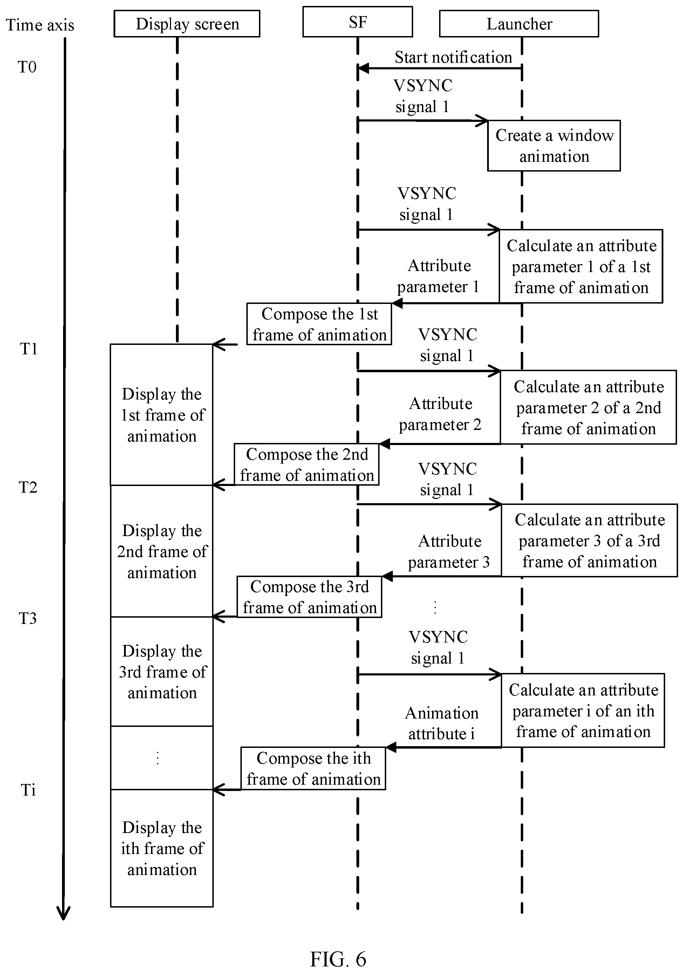

In the time period from T0 to Ti, a process in which the display screen displays the animation frames (for example, the animation frame 503, the animation frame 504, the animation frame 505, ..., and the animation frame 506) may be referred to as playing (or displaying) the window animation. The window animation played in FIG. 5 is still taken as an example. As shown in FIG. 6, at the moment T0, a Launcher detects an operation that the user selects the application icon 502. Then, the Launcher sends a start notification to an SF in response to the operation that the user selects the application icon 502. For example, with reference to the example diagram of the software architecture shown in FIG. 3, the Launcher may invoke a JNI, and send the start notification to the SF through the GUI. In this way, the SF may periodically send a vertical synchronization (Vertical Sync Signal, VSYNC) signal to the Launcher, to indicate the Launcher to create the window animation and determine an attribute parameter of each animation frame. In addition, the VSYNC signal periodically sent by the SF to the Launcher may be a VSYNC signal periodically sent by a VSYNC manager in the SF to the Launcher.

In a subsequent embodiment, the VSYNC signal sent by the SF to the Launcher may be referred to as a VSYNC signal 1. In this embodiment of this application, a manner in which the SF sends the VSYNC signal 1 to the Launcher is not specifically limited. For specific details, refer to a related technology.

For example, when the Launcher receives a 1st frame of VSYNC signal 1, the Launcher may create a window corresponding to the window animation by using a window manager.

Then, when receiving a 2nd frame of VSYNC signal 1, the Launcher may draw display content of a 1st animation frame by using the window manager, and determine a corresponding attribute parameter 1.

After determining the attribute parameter 1 of the 1st animation frame, the Launcher may send the drawn display content of the 1st frame of animation and the attribute parameter 1 to the SF. For example, the drawn 1st frame of animation and the attribute parameter 1 are packaged by invoking a Binder interface of the GUI by using the JNI, and then are submitted to the SF through a setTransaction interface.

In this way, the SF may process, with reference to the attribute parameter 1, the display content drawn by the Launcher, to obtain the 1st animation frame, which may also be referred to as the 1st frame of animation. In addition, the SF may invoke a display to indicate the display screen to render the 1st frame of animation. In this way, the electronic device may start to display the 1st frame of animation at the moment T1.

When receiving a 3rd frame of VSYNC signal 1, similarly, the Launcher may draw display content of the 2nd frame of animation, and determine a corresponding attribute parameter 2. A manner of determining the attribute parameter 2 may be predicting a display progress of the window animation at a next moment (for example, predicting that the animation frame with the second size needs to be displayed at the next moment; for another example, predicting that the animation frame needs to be displayed at a display position 2 at the next moment) based on a current display progress of the window animation (for example, the animation frame with the first size is displayed; for another example, the animation frame is displayed at a display position 1). In this way, the attribute parameter 2 is determined.

Then, the display content of the 2nd frame of animation and the attribute parameter 2 are sent to the SF. In this way, the SF may process, based on the attribute parameter 2, a 2nd frame of display content drawn by the Launcher, to obtain the 2nd frame of animation, and indicate the display screen to render the 2nd frame of animation. In this way, the electronic device may start to display the 2nd frame of animation at the moment T2.

In the foregoing embodiment, the electronic device calculates an attribute parameter of a next frame of animation each time the electronic device processes one frame of animation, and until the SF may send an (i+1)th frame of VSYNC signal 1 to the Launcher, to trigger processing of the ith frame of animation, the window animation ends.

As shown in FIG. 6, in a time dimension, the display screen displays the 1st frame of animation between T1 and T2; the display screen displays the 2nd frame of animation between T2 and T3; the display screen sequentially displays the 3rd frame of animation to the (i-1)th frame of animation between T3 and Ti. A value of i is greater than 4 in a scenario shown in FIG. 6. After Ti, the electronic device displays the ith frame of animation.

In the foregoing embodiment, in a process of implementing the window animation, before the display screen displays each animation frame, the Launcher needs to repeatedly invoke an application framework layer, and the Binder needs to be repeatedly occupied. In the foregoing embodiment, some steps for implementing the window animation are stable and fully predicted. These steps need to be completed by two or more modules in cooperation. In a case of heavy load, inter-module coupling is not conducive to completing the animation based on a predetermined behavior.

In addition, in a running process of the electronic device, a high load, superposition of another service, resource scheduling difficulty, and the like may occur in a process of the Launcher, a process of the Binder, a process of the SF, and a process of the window manager, and may be collectively referred to as being busy in a subsequent embodiment. In the process of displaying the window animation, if the process of the Launcher, the process of the Binder, the process of the SF, and the process of the window manager are busy, a frame of the window animation may be discarded.

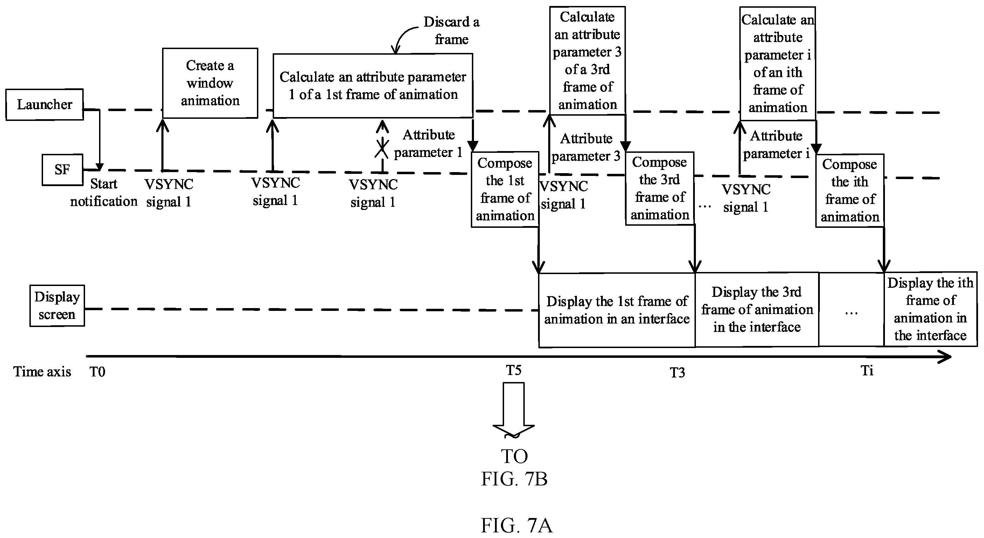

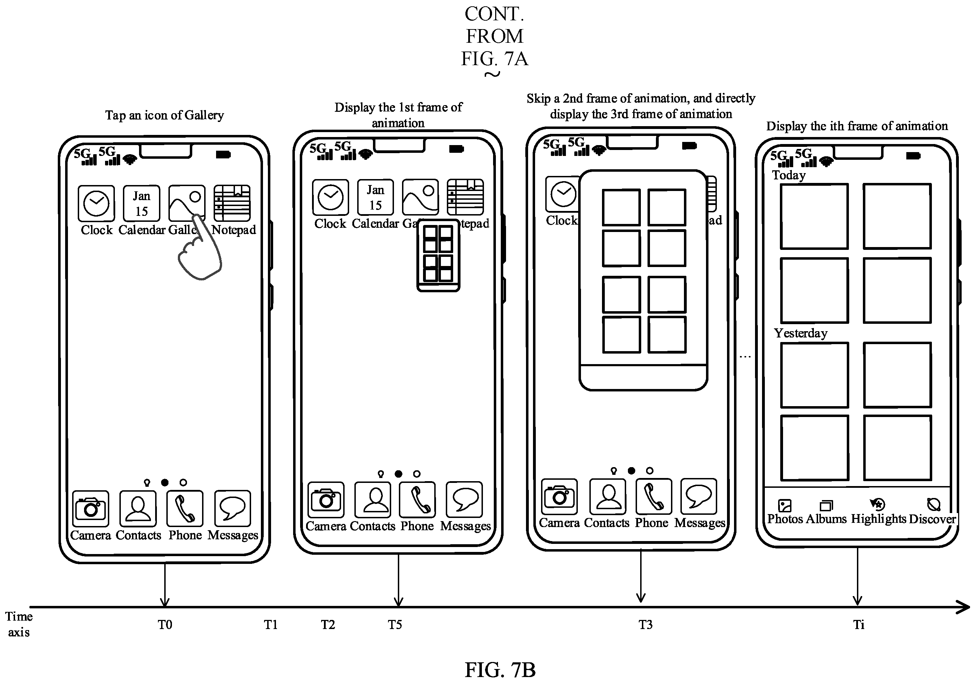

FIG. 7A and FIG. 7B show a scenario in which a process of a Launcher is abnormal or busy in a process of implementing a window animation in a method shown in FIG. 6. As shown in FIG. 7A and FIG. 7B, after the Launcher receives the 2nd frame of VSYNC signal 1, because the process of the Launcher, the process of the window manager, or the process of the Binder is busy, the attribute parameter 1 of the 1st frame of animation cannot be determined in a timely manner, or cannot be sent to the SF in a timely manner. In addition, the SF cannot send the 3rd frame of VSYNC signal 1 to the Launcher. In this way, a time point T5 at which the electronic device displays the 1st frame of animation is later than T1, and the window animation stutters. In addition, the electronic device further skips display of the 2nd frame of animation, and directly displays the 3rd frame of animation of the window animation. Consequently, the window animation is visually incoherent to the user, and use experience of the user is affected.

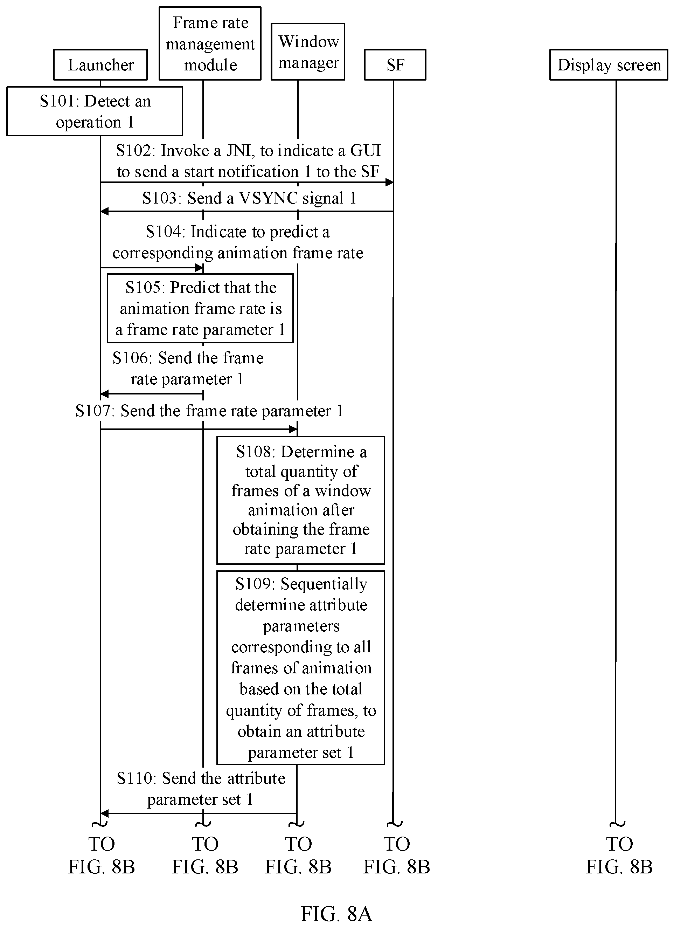

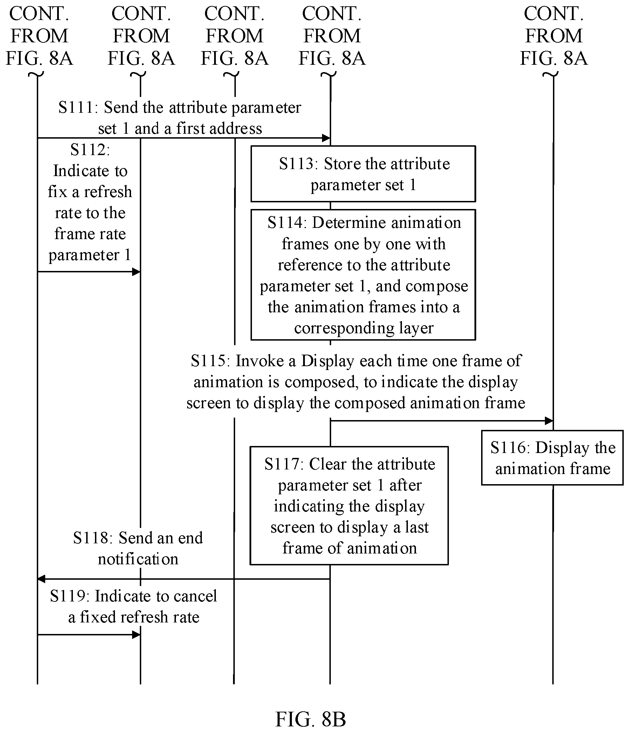

An embodiment of this application provides another window animation processing method. As shown in FIG. 8A and FIG. 8B, the window animation processing method may include the following steps.

S101: A Launcher detects an operation 1.

The operation 1 may be an operation that can trigger display of a window animation, and the Launcher is an initiator of the window animation.

Certainly, the Launcher is only an example of the initiator of the window animation. In a running process of an electronic device, the initiator of the window animation may be another application at an application layer, or may be a window manager. In addition, different initiators may correspond to different operators 1. For example, the operation 1 corresponding to the Launcher may be an operation that a user taps an application icon. For another example, an operation 1 corresponding to the window manager may be an operation that a user taps to indicate a network address of a third-party application. For another example, an operation 1 corresponding to a third-party application may be an operation that a user taps a minimized window provided by the third-party application. Certainly, a same initiator may also correspond to a plurality of types of operations 1. For example, the operation 1 corresponding to the Launcher may further include: the user starts an application program in a multi-task interface, the user slides to browse different multi-task windows in the multi-task interface, and the like. For example, the operation 1 corresponding to the third-party application may further include an operation that the user indicates to switch different application interfaces. In a subsequent embodiment, an example in which the Launcher is the initiator of the window animation and the operation 1 that the user taps the application icon is detected is used to describe implementation details of this embodiment of this application.

S102: The Launcher invokes a JNI, to indicate a GUI to send a start notification 1 to an SF.

In some embodiments, the Launcher may invoke, through the JNI and the GUI in response to the operation 1, a process of a Binder to send the start notification 1 to the SF. For specific implementation details, refer to a related technology. Details are not described herein again. In addition, the start notification 1 may indicate the SF to send a VSYNC signal, namely, a VSYNC signal 1, to the Launcher. In this way, the VSYNC signal 1 may indicate the Launcher to determine attribute parameters of all animation frames and draw corresponding display content. For specific implementation details, refer to descriptions in subsequent embodiments.

S103: The SF sends the VSYNC signal 1 to the Launcher.

In some embodiments, the SF may also send the VSYNC signal 1 to the Launcher through the process of the Binder, the JNI, the GUI, and the like. In some embodiments, only one frame of VSYNC signal 1 may be sent. In this way, when the Launcher receives the VSYNC signal 1, the procedure proceeds to S104.

Certainly, in another embodiment, the SF may alternatively periodically send a plurality of frames of VSYNC signals 1. When the SF periodically sends the plurality of frames of VSYNC signals 1, and the Launcher receives a 1st frame of VSYNC signal 1, the procedure proceeds to S104.

S104: The Launcher indicates a frame rate management module to predict a corresponding animation frame rate.

The animation frame rate may indicate a quantity of animation frames displayed on a display screen per second. In some embodiments, a frame rate of the window animation is the same as a display screen refresh rate. In this way, the frame rate management module may predict a refresh rate of the display screen in a time period of playing the window animation, and then use the predicted refresh rate as the animation frame rate.

S105: The frame rate management module predicts that the animation frame rate is a frame rate parameter 1.

In some embodiments, the frame rate management module may identify a running scenario of a current electronic device, for example, a scenario of tapping the application icon, a scenario of switching between a foreground running state and a background running state of an application program, and a scenario of switching an application interface of an application program. Then, the display screen refresh rate in the time period of playing the window animation is predicted based on a correspondence between the refresh rate and different learned running scenarios.

For example, the refresh rate corresponding to the display screen is the frame rate parameter 1 in the scenario of tapping the application icon. In this way, when determining that the operation 1 is to tap the application icon, the frame rate management module may predict that the animation frame rate is the frame rate parameter 1.

S106: The frame rate management module sends the frame rate parameter 1 to the Launcher.

S107: The Launcher sends the frame rate parameter 1 to the window manager.

S108: The window manager determines a total quantity of frames of the window animation after obtaining the frame rate parameter 1.

In some embodiments, the window manager may determine, based on the frame rate parameter 1 and playing duration of the window animation, a total quantity of animation frames included in the window animation, namely, the total quantity of frames of the window animation. For example, a product of the frame rate parameter 1 and the playing duration of the window animation may be used as the total quantity of frames.

In addition, different initiators indicate to create window animations with different playing duration. Window animations that need to be played in different running scenarios may also have different playing duration. This is not specifically limited in this embodiment of this application. A correspondence among different initiators, different running scenarios, and duration of different window animations may be preconfigured in the electronic device.

In this way, in some embodiments, the window manager may determine the playing duration corresponding to the window animation based on the initiator of the window animation and a current running scenario.

S109: The window manager sequentially determines attribute parameters corresponding to all frames of animation based on the total quantity of frames, to obtain an attribute parameter set 1.

In some embodiments, the window manager may determine a matched animation rule based on the running scenario. It may be understood that the animation rule may indicate an animation effect of the window animation. In addition, different running scenarios correspond to different animation rules. Certainly, animation rules corresponding to different running scenarios may be preconfigured. For example, the animation rule includes an attribute parameter of a last frame of animation. The animation rule further includes a change rule of an attribute parameter corresponding to an animation frame between an initial animation frame and the last animation frame.

In this way, the window manager may determine a difference between attribute parameters of two adjacent frames of animations based on the animation rule and the total quantity of frames, for example, a display size difference or a display position difference.

For example, the display content drawn by the Launcher may be referred to as the initial animation frame. A size of the initial animation frame is (100, 100), a window width and height of the last frame of animation are (0, 0), and a window width and height of the animation frame between the initial animation frame and the last frame of animation change linearly. When the initial animation frame is not displayed, it is determined that 10 animation frames need to be displayed in the window animation, and the window manager may determine that a window width difference between two adjacent frames of animations is ζ₁=(Aᵢ-A₁)/Fₛᵤₘ=-10, and a window height difference is γ₁=(Bᵢ-B₁)/Fₛᵤₘ=-10. Aᵢ is a window width of the last animation frame, Bᵢ is a window height of the last animation frame, A₁ is a window width of the initial animation frame, B₁ is a window height of the initial animation frame, and Fₛᵤₘ is the total quantity of frames.

Then, an attribute parameter of each animation frame is calculated based on the display size difference and the display position difference between the two adjacent frames of animation.

For example, a window width of an mth frame of animation is determined based on the window width difference with reference to a formula: Aₘ=ζ₁*Fm+A₁. Herein, Aₘ is the window width of the mth frame of animation, and a value of m may be any positive integer between 1~i. ζ₁ may indicate the window width difference between the two adjacent frames of animations. Fₘ is a frame sequence number of the mth frame. For example, a value of Fₘ is equal to m. A₁ is the window width of the initial animation frame.

For another example, a window height of the mth frame of animation is determined based on the window height difference with reference to a formula: Bₘ=γ₁*Fₘ+B₁. Herein, Bₘ is the window height of the mth frame of animation, and a value of m may be any positive integer between 1~i. γ₁ may indicate the window height difference between the two adjacent frames of animations. Fₘ is a frame sequence number of the mth frame. For example, a value of Fₘ is equal to m. B₁ is the window width of the initial animation frame.

In the foregoing example, based on the animation rule, it may be determined that a display size of the 1st frame of animation is (90, 90), a display size of the 2nd frame of animation is (80, 80), a display size of the 3rd frame of animation is (70, 70), a display size of a 4th frame of animation is (60, 60), a display size of a 5th frame of animation is (50, 50), a display size of a 6th frame of animation is (40, 40), a display size of a 7th frame of animation is (30, 30), a display size of an 8th frame of animation is (20, 20), a display size of a 9th frame of animation is (10, 10), and a display size of a 10th frame of animation (namely, a last frame of animation) is (0, 0). That is, the determined window animation has a shrinking animation effect based on the animation rule.

The foregoing provides only an example. In this embodiment of this application, attribute information of each frame of animation may be calculated in another manner. After the attribute parameter of each frame of animation in the window animation is determined, the attribute parameters of all the animation frames are used as an attribute parameter set, namely, the attribute parameter set 1. In addition, each attribute parameter in the attribute parameter set 1 corresponds to a frame number, and the frame number is used to establish a correspondence between an attribute parameter in the attribute parameter set 1 and an animation frame of the window animation.

In addition, the manner in the foregoing example may also be used to determine a display position in the attribute parameter. For example, the animation rule is configured with a display position of the 1st frame of animation, a display position of the last frame of animation, and a displacement track of an animation frame on the display screen. In this way, a display position of each frame of animation may be determined based on the display position of the 1st frame of animation and the display position of the last frame of animation with reference to the displacement track of the animation frame on the display screen and the total quantity of frames.

S110: The window manager sends the attribute parameter set 1 to the Launcher.

In some embodiments, the Launcher may further invoke an application framework layer to draw display content of each frame of animation.

S111: The Launcher sends the attribute parameter set 1 and a first address to the SF.

The first address may indicate that both the Launcher and the SF may access storage space, and the Launcher may store drawn display content of the 1st frame of animation in the storage space indicated by the first address.

In some embodiments, the Launcher may invoke the JNI and the GUI, to indicate the process of the Binder to send the attribute parameter set 1 and the first address to the SF. In another embodiment, the window manager may alternatively be indicated to directly send the attribute parameter set 1 and the first address to the SF. A specific implementation is not specifically limited.

S112: The Launcher indicates the frame rate management module to maintain the refresh rate to be the frame rate parameter 1.

In some embodiments, the frame rate management module may further control the display screen refresh rate. After the attribute parameter set 1 is sent to the SF, the frame rate management module is indicated to maintain the display screen refresh rate to be the frame rate parameter 1. In this way, smoothness of the window animation can be ensured during display of the window animation.

S113: The SF stores the attribute parameter set 1.

There is no necessary sequence between S113 and S112, and this application sets no specific limitation thereto. In some embodiments, the SF may store the attribute parameter set 1 in the storage space that may be accessed by the SF.

S114: The SF determines animation frames one by one with reference to the attribute parameter set 1, and composes the animation frames into a corresponding layer.

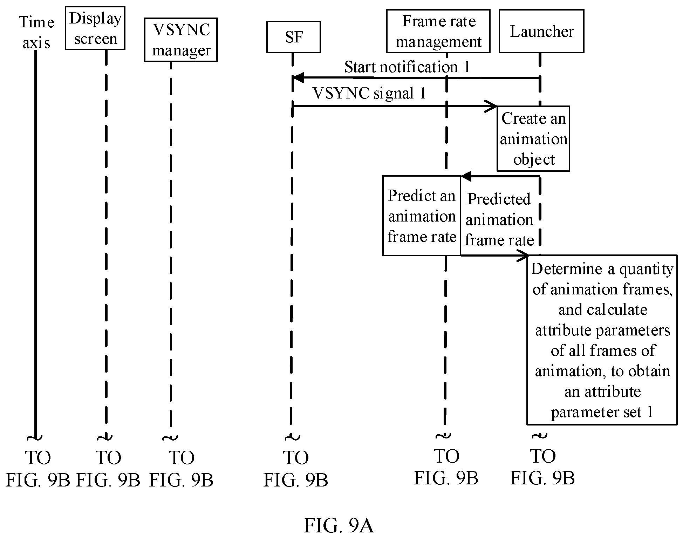

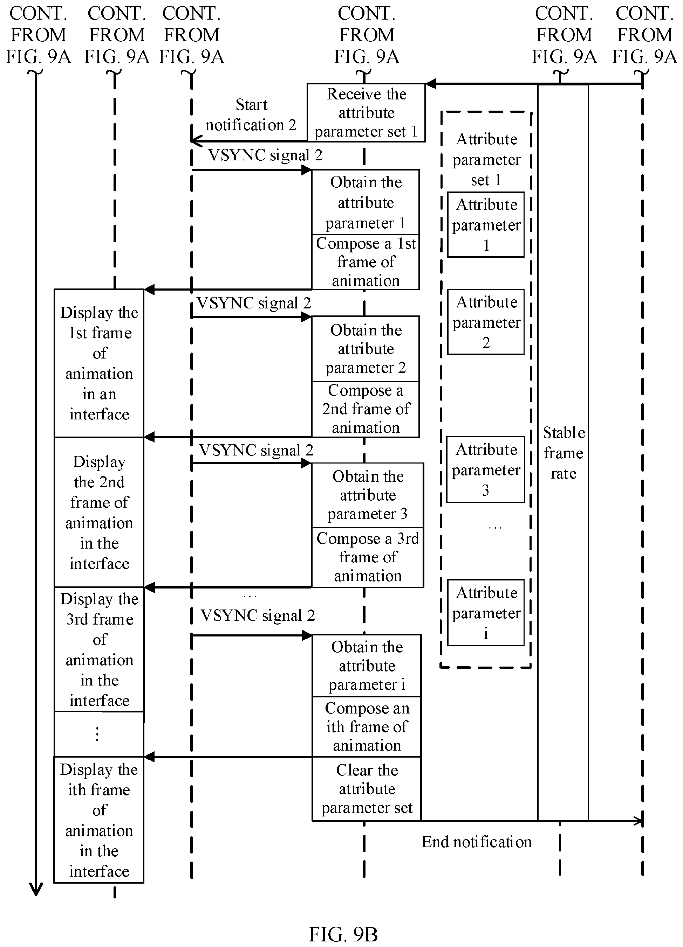

FIG. 9A and FIG. 9B show a process in which the SF independently completes composition of all the animation frames after receiving the attribute parameter set 1. As shown in FIG. 9A and FIG. 9B, after the attribute parameter set 1 is stored, a main process of the SF may send a start notification 2 to a VSYNC manager. The VSYNC manager is a submodule that is in the SF and that is configured to generate a VSYNC signal.

In some embodiments, after receiving the start notification 2, the VSYNC manager may periodically generate a VSYNC signal 2, and send the VSYNC signal 2 to the main process of the SF. Each frame of VSYNC signal 2 may indicate the main process of the SF to determine one animation frame, and composes the animation frame into a corresponding layer.

In a subsequent embodiment, that a thread of the VSYNC manager sends the VSYNC signal 2 to the main process of the SF may be briefly referred to as that the VSYNC manager sends the VSYNC signal 2 to the SF.

As shown in FIG. 9A and FIG. 9B, when the VSYNC manager sends a 1st frame of VSYNC signal 2 to the SF after the VSYNC manager receives the start notification 2, the main process of the SF may obtain the drawn display content from the first address. Then, an attribute parameter (namely, the attribute parameter 1) whose frame sequence number is 1 is obtained from the attribute parameter set 1. In this case, the SF may determine the 1st frame of animation based on the obtained display content and the obtained attribute parameter 1, for example, process the corresponding display content based on the attribute parameter 1, to obtain a corresponding animation frame.

The processing the display content based on the attribute parameter 1 may include: scaling up or scaling down the corresponding display content based on a display size in the attribute parameter; or changing an edge shape of the display content based on a display appearance in the attribute parameter. Then, the 1st frame of animation is composed into a corresponding layer. For example, a position of the animation frame at the corresponding layer is determined based on a display position in the attribute parameter 1, and then the animation frame is composed into the layer. In this way, after the layer is rendered on the display screen, an actual display position of the animation frame matches the display position in the attribute parameter 1. Certainly, for specific implementation details, refer to a working principle of the SF in the related technology. Details are not described herein again.

When the VSYNC manager sends a 2nd frame of VSYNC signal 2 to the SF after the VSYNC manager receives the start notification 2, the main process of the SF may obtain an attribute parameter (namely, an attribute parameter 2) whose frame sequence number is 2 from the attribute parameter set 1, and process corresponding display content based on the attribute parameter 2, to determine the 2nd frame of animation, for example, process the corresponding display content based on the attribute parameter 2, to obtain a corresponding animation frame. Then, the 2nd frame is composed into a corresponding layer.

When the VSYNC manager sends a 3rd frame of VSYNC signal 2 to the SF after the VSYNC manager receives the start notification 2, the main process of the SF may obtain an attribute parameter (namely, an attribute parameter 3) whose frame sequence number is 3 from the attribute parameter set 1, and process corresponding display content based on the attribute parameter 3, to determine the 3rd frame of animation. Then, the 3rd frame of animation is composed into a corresponding layer.

By analogy, when the VSYNC manager sends an ith frame of VSYNC signal 2 to the SF after the VSYNC manager receives the start notification 2, the main process of the SF may obtain an attribute parameter (namely, an attribute parameter i) whose frame sequence number is i from the attribute parameter set 1, and process corresponding display content based on the attribute parameter i, to determine the ith frame of animation. Then, the ith frame of animation is composed into a corresponding layer. It may be understood that i is the total quantity of frames of the window animation.

It may be understood that, a frame sequence number of each attribute parameter in the attribute parameter set 1 may indicate a sequence of obtaining each attribute parameter from the attribute parameter set 1 by the SF, and a sequence of animation frames that may be determined based on the attribute parameter set 1.

When display content of the animation frame of the window animation remains unchanged, display content corresponding to each attribute parameter is drawn display content at the first address.

When the display content of the animation frame of the window animation changes, for example, when display content of an nth frame of animation is different from display content of an (n-1)th frame of animation, the Launcher may draw the display content of the nth frame of animation, and store the drawn display content at a second address. n may indicate a frame sequence number of an animation frame whose content changes, for example, is referred to as a change sequence number, and n may be any positive integer greater than 1 and not greater than i. The second address may indicate another storage space that can be accessed by both the Launcher and the SF, and the second address is used to store changed display content. For example, one change sequence number corresponds to one second address. After the display content corresponding to the nth frame of animation is drawn, the Launcher sends a frame sequence number (namely, n) and the second address that correspond to the nth frame of animation to the SF. In this way, in a scenario in which the SF obtains an attribute parameter n from the attribute parameter set 1, the SF needs to first obtain the drawn display content from the second address, use the drawn display content as display content corresponding to the attribute parameter n, and perform processing.

In addition, when there is only one change sequence number, display content corresponding to an attribute parameter whose frame sequence number is greater than n may also be display content at the second address.

When a plurality of change sequence numbers are included, for example, a change sequence number 1 and a change sequence number 2 are included, the change sequence number 1 is less than the change sequence number 2, a second address of the change sequence number 1 may be referred to as a second address 1, and a second address corresponding to the change sequence number 2 may be referred to as a second address 2. If a frame sequence number of an attribute parameter is not less than the change sequence number 1 and is less than the change sequence number 2, it is determined that display content corresponding to the attribute parameter is display content stored at the second address 1. If a frame sequence number of an attribute parameter is not less than the change sequence number 2, it is determined that display content corresponding to the attribute parameter is display content stored at the second address 2.

In addition, the VSYNC manager may further generate the VSYNC signal 1. When the VSYNC manager also periodically generates the VSYNC signal 1, the SF also periodically sends the VSYNC signal 1 to the Launcher. In a scenario in which the SF periodically sends the VSYNC signal 1 to the Launcher, similar to the foregoing embodiment, starting from receiving the 2nd frame of VSYNC signal 1, each time one frame of VSYNC signal 1 is received, the Launcher triggers calculation of an attribute parameter of one animation frame. For details, refer to a step performed after the Launcher receives the 2nd frame of VSYNC signal 1 in FIG. 6.

Certainly, different from the foregoing embodiment, in this embodiment of this application, SF has obtained attribute parameters of all animation frames in S109~S111. In this way, an attribute parameter that is of a single frame of animation and that is calculated in response to the VSYNC signal 1 may not be sent to the SF. In addition, in a scenario in which the display content remains unchanged, an interaction frequency between the SF and the Launcher may be more significantly reduced, or even no interaction is performed, so that decoupling between different modules is more sufficient, to avoid a case in which a process of the Launcher is busy and consequently, display of the window animation is affected.

In another embodiment, when the VSYNC manager also periodically generates the VSYNC signal 1, the Launcher does not respond to the VSYNC signal 1 starting from receiving the 2nd frame of VSYNC signal 1. This is not limited in this embodiment of this application.

S115: The SF invokes the display each time one frame of animation is composed, to indicate the display screen to display the frame of animation.

S116: The display screen displays the frame of animation.

In some embodiments, each time the SF composes one frame of animation, the SF may send the frame of animation (namely, a layer that includes the frame of animation) to the display screen by using the display. In this way, the display screen may display the frame of animation.

As shown in FIG. 9A and FIG. 9B, after the 1st frame of animation is composed into the corresponding layer, the SF may send the 1st frame of animation to the display screen by using the display. The display screen renders a received animation frame on a screen. In this way, the electronic device may display the 1st frame of animation.

After the 2nd frame of animation is composed into the corresponding layer, the SF may send the 2nd frame of animation to the display screen by using the display. The display screen renders a received animation frame on the screen. After the display screen is refreshed, the display screen no longer displays the 1st frame of animation, and changes to display the 2nd frame of animation. In this way, the electronic device may display the 2nd frame of animation.

After the 3rd frame of animation is composed into the corresponding layer, the SF may send the 3rd frame of animation to the display screen by using the display. The display screen renders a received animation frame on the screen. After the display screen is refreshed, the display screen no longer displays the 2nd frame of animation, and changes to display the 3rd frame of animation. In this way, the electronic device may display the 3rd frame of animation.

Similarly, after the ith frame of animation is composed into the corresponding layer, the SF may send the ith frame of animation to the display screen by using the display. The display screen renders a received animation frame on the screen. In this way, the electronic device may display the ith frame of animation.

It may be understood that i is the total quantity of frames of the window animation. In the foregoing example, i may be a value not less than 4. When i is greater than 4, after the 3rd frame of animation is displayed and before the ith frame of animation is displayed, the display screen may further display, in response to the SF, another animation composed by the SF, for example, the 4th frame of animation. Certainly, in another example, i may alternatively be a value greater than 1.

In this way, when the SF composes animation frames one by one, the display screen also displays the corresponding animation frames one by one, and the display screen can also display the animation effect of the window animation. In addition, a process of composing each frame of animation does not need to frequently interact with processes of the Launcher and the application frame layer, and does not need to frequently occupy the process of the Binder either. After the attribute parameter set 1 of the window animation is delivered to the SF, even if the process of the Launcher, the process of the application frame layer, or the process of the Binder is busy, or the like, display of the window animation is not affected, to reduce a possibility that a frame of the window animation is discarded.

S117: The SF clears the attribute parameter set 1 after indicating the display screen to display the last frame of animation.

S118: The SF sends an end notification to the Launcher.

The end notification is used to indicate that display of the window animation is completed. In some embodiments, the SF may also feed back the end notification to the initiator of the window animation, for example, the Launcher through the process of the Binder, the GUI, and the JNI.

S119: The Launcher indicates the frame rate management module to cancel a fixed refresh rate.

In this way, the frame rate management module may restore dynamically adjusting the display screen refresh rate based on an actual running scenario, in consideration of both power consumption and a display effect of the display screen.

In some embodiments, the main process of the SF may also be busy in the running process of the electronic device. If content in a time period in which the main process of the SF is busy indicates the SF to compose a wth frame of animation, a time in which the wth frame of animation is composed is relatively long. In addition, in a period in which the main process of the SF is busy, the SF cannot normally receive a (w+1)th frame of VSYNC signal 2 sent after the VSYNC manager receives the start notification 2. w may be any positive integer less than i.

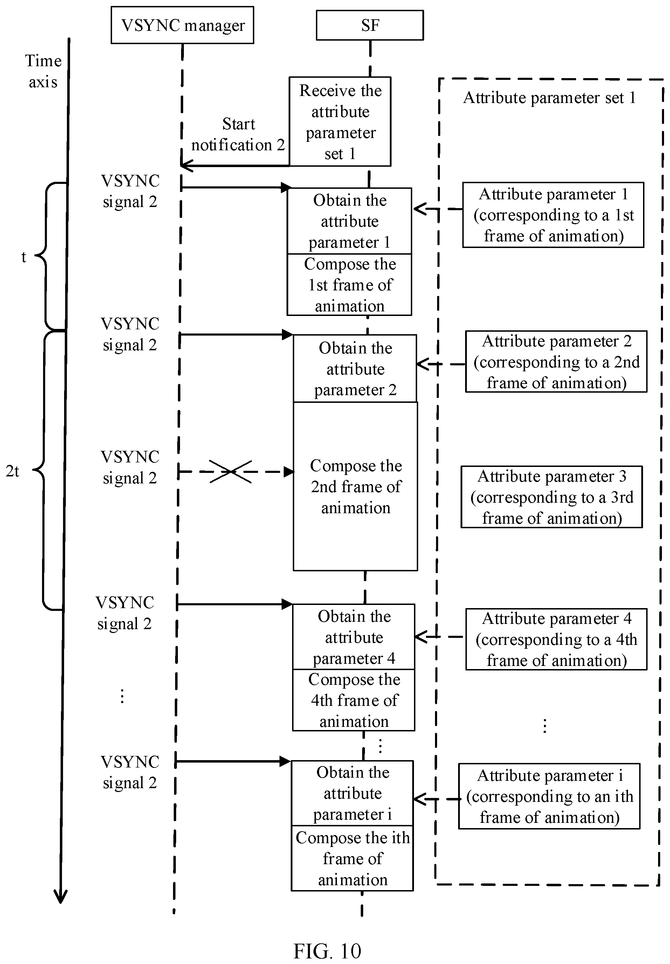

FIG. 10 shows a scenario in which the SF is abnormal or busy in a process of composing the window animation in the method in FIG. 9A and FIG. 9B. As shown in FIG. 10, that w is 2 is taken as an example. In a scenario in which a time in which the 2nd frame of animation is composed is relatively long, a time in which the electronic device displays the 1st frame of animation increases, and a time at which the 2nd frame of animation is displayed is also later than an expected time point.

In this embodiment of this application, each time after receiving the VSYNC signal 2, the SF may record a system time at which the VSYNC signal 2 is received, which is also referred to as a synchronization time point.

Then, a synchronization time point of a current received VSYNC signal 2 is compared with a synchronization time point of a previous adjacent frame of VSYNC signal 2.

If a time difference between the current received VSYNC signal 2 and the previous adjacent frame of VSYNC signal 2 is equal to duration t, a next attribute parameter is obtained from the attribute parameter set 1, and a corresponding animation frame is determined. For example, a frame sequence number of a most recently obtained attribute parameter is k, and the foregoing "obtaining the next attribute parameter from the attribute parameter set 1" may be obtaining an attribute parameter whose corresponding frame sequence number is k+1 from the attribute parameter set 1. The duration t is a time interval at which the VSYNC manager sends the VSYNC signal 2, and the duration t may have a fixed value. k may be any integer value between 1 and i.

If the time difference between the currently received VSYNC signal 2 and the previous adjacent frame of VSYNC signal 2 is greater than the duration t, a multiple of the time difference to the duration t is determined. For example, the multiple is a. In this way, an attribute parameter that needs to be obtained in response to the currently received VSYNC signal 2 may be determined based on the multiple "a" and the attribute parameter most recently obtained from the attribute parameter set 1.

For example, the SF may first determine the frame sequence number of the attribute parameter most recently obtained from the attribute parameter set 1. For example, the frame sequence number is k. Then, it is determined that a frame sequence number of an attribute parameter that needs to be obtained currently is equal to a sum of k and the multiple (namely, a). Finally, the corresponding attribute parameter is obtained from the attribute parameter set 1 based on the frame sequence number of the attribute parameter that needs to be obtained currently.

As shown in FIG. 10, the main process of the SF cannot normally receive the 3rd frame of VSYNC signal 2 sent by the VSYNC manager, but can normally receive a 4th frame of VSYNC signal 2 sent by the VSYNC manager. In this way, when the 4th frame of VSYNC signal 2 sent by the VSYNC manager is received, for the SF, the previous adjacent frame of VSYNC signal 2 is the 2nd frame of VSYNC signal 2 sent by the VSYNC manager. Clearly, a time difference between a moment at which the 2nd frame VSYNC signal 2 is received and a moment at which the 4th frame of VSYNC signal 2 is received is greater than the duration t. The SF may determine that the multiple of the time difference to the duration t is two. In this way, based on the frame sequence number 2 of the most recently obtained attribute parameter and the determined multiple "2", it may be determined that the SF needs to obtain an attribute parameter, for example, an attribute parameter 4 whose frame sequence number is 4 from the attribute parameter set 1 in response to the currently received VSYNC signal 2, namely, the 4th frame of VSYNC signal 2 sent by the VSYNC manager. Then, corresponding display content is processed based on the attribute parameter 4, to obtain the 4th frame of animation, and the display screen is indicated to display the 4th frame of animation.

In this way, in a scenario in which a time in which the 1st frame of animation is displayed is too long and a time at which the 2nd frame of animation is displayed is relatively late, the electronic device may skip displaying the 3rd animation frame, and directly display the 4th animation frame after displaying the 2nd animation frame. After the foregoing processing, total duration in which the window animation is displayed can be prevented from being increased, and impact on use experience of the user can be reduced.

In some embodiments, in a process in which the electronic device displays the window animation, the electronic device may receive an operation that the user indicates to interrupt the animation. For example, after the user indicates the foreground to run a Gallery application, during display of a window animation corresponding to the Gallery application, the user indicates to cancel running of the Gallery application on the foreground, and the electronic device may cancel the window animation.

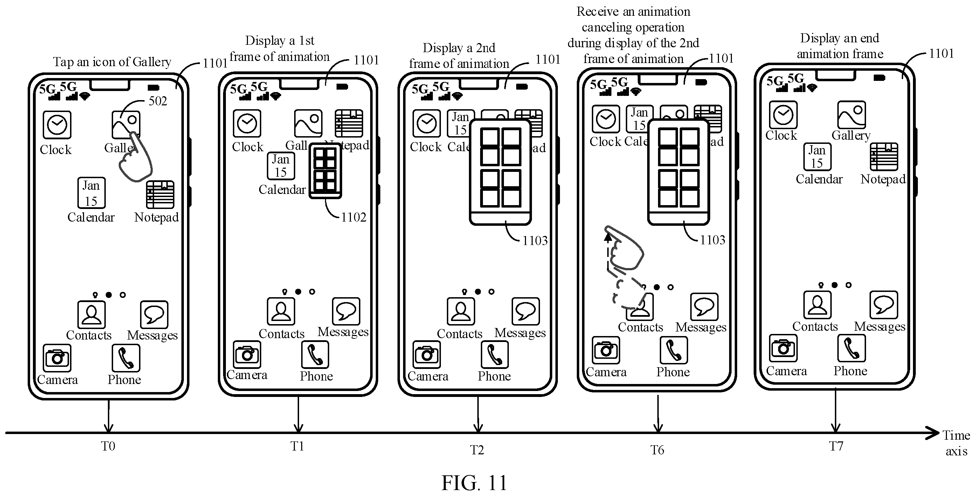

FIG. 11 shows that the window animation is cancelled in a first manner in response to an operation of canceling the window animation during display of the window animation. In the first manner, a process of canceling the window animation is more efficient.

As shown in FIG. 11, a home screen 1101 displayed by the electronic device includes an application icon 502 corresponding to the Gallery application. At a moment T0, the user taps a display area of the application icon 502 on the display screen, that is, taps a Gallery icon. Correspondingly, the electronic device may create and display a corresponding window animation in response to an operation that the user taps the application icon 502.

For example, the home screen 1101 displays an animation frame 1102 with a first size between a moment T1~a moment T2, which may also be referred to as a 1st frame of animation. The home screen 1101 displays an animation frame 1103 with a second size after the moment T2, which may also be referred to as a 2nd frame of animation. At a moment T6 after the moment T2, that is, within a time period in which the window animation is being displayed, the electronic device receives an operation that the user indicates to cancel starting of the Gallery application, for example, an upward slide operation, and may also determine that an operation that indicates to cancel the window animation is detected. At a moment T7, an end animation frame is displayed.

In some embodiments, the electronic device may restore display of the home screen 1101 or display of another pre-specified interface in response to the operation that indicates to cancel the window animation.

In an implementation, after S113, the main process of the SF sends the start notification 2 to the VSYNC manager. Then, the VSYNC manager may periodically send the VSYNC signal 2 to the main process of the SF in response to the start notification 2.

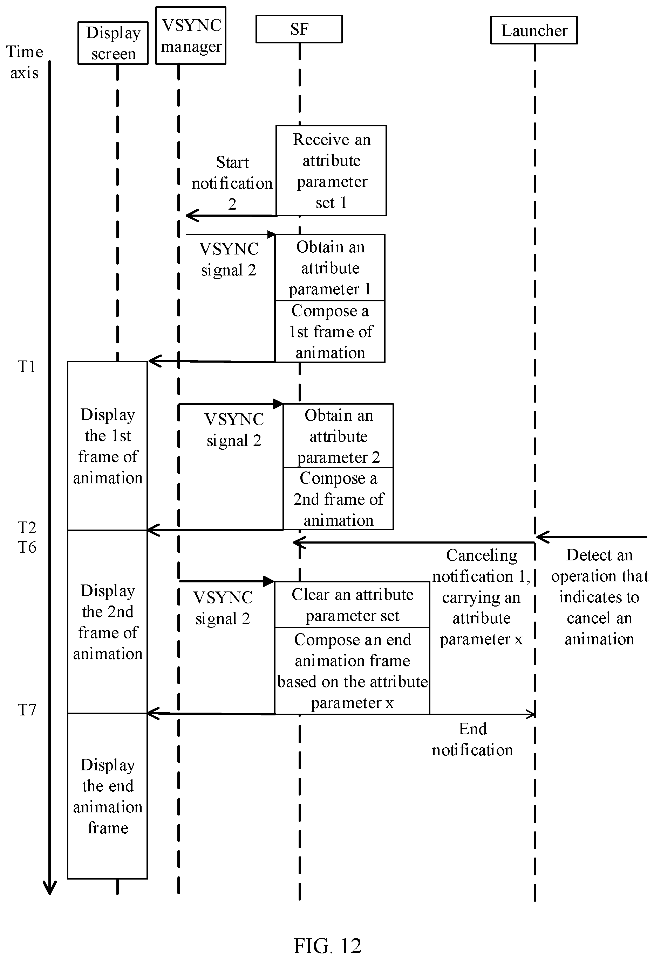

FIG. 12 is an implementation process of canceling the window animation shown in FIG. 11.

As shown in FIG. 12, after the SF sends the start notification 2 to the VSYNC manager, when receiving the 1st frame of VSYNC signal 2 from the VSYNC manager, the SF determines the attribute parameter 1 from the attribute parameter set 1, and then processes the display content at the first address based on the attribute parameter 1, to obtain the 1st frame of animation, and compose the 1st frame of animation into the corresponding layer. After the 1st frame of animation is composed into the corresponding layer, the SF may send the 1st frame of animation to the display screen by using the display, to indicate the display screen to render a received animation frame on the screen. In this way, after the moment T1, the display screen of the electronic device may display the 1st frame of animation.

After the SF sends the start notification 2 to the VSYNC manager, when receiving the 2nd frame of VSYNC signal 2 from the VSYNC manager, the SF determines the attribute parameter 2 from the attribute parameter set 1. Then, the 2nd frame of animation is obtained based on the attribute parameter 2 with reference to the corresponding display content, and the 2nd frame of animation is composed into the corresponding layer. After the 2nd frame of animation is composed into the corresponding layer, the SF may send the 2nd frame of animation to the display screen by using the display, to indicate the display screen to render a received animation frame on the screen. In this way, after the moment T2, the display screen of the electronic device may display the 2nd frame of animation.

As shown in FIG. 12, at the moment T6 after the moment T2, the Launcher detects the operation that indicates to cancel the window animation, and before the moment T6, the main process of the SF does not receive the 3rd frame of VSYNC signal 2 from the VSYNC manager. In this scenario, the Launcher may generate a canceling notification 1. The canceling notification 1 carries an attribute parameter x. The attribute parameter x may be any attribute parameter in the attribute parameter set 1, or may be an attribute parameter that does not belong to the attribute parameter set 1.

For example, the Launcher may determine the corresponding attribute parameter x based on an end animation (namely, an animation frame that needs to be displayed when the window animation is interrupted) that is preconfigured in the animation rule. For example, the attribute parameter x may be an attribute parameter corresponding to the last frame of animation, or may be an attribute frame of the 1st frame of animation. For another example, the attribute parameter x may be a parameter that indicates to display no animation.

After the SF receives the canceling notification 1, when the SF receives the VSYNC signal 2 again, the SF may clear the attribute parameter set 1, and then processes corresponding display content based on the attribute parameter x in the canceling notification 1, to obtain the corresponding end animation.

In another embodiment, the attribute parameter set 1 may alternatively be cleared immediately after the canceling notification 1 is received. In this way, after the SF receives the VSYNC signal 2 again, the SF processes corresponding display content based on the attribute parameter x in the canceling notification 1, to obtain the corresponding end animation.

An example in which a display size indicated in the attribute parameter x is (0, 0) is used. As shown in FIG. 11, after the operation that indicates to cancel the window animation is detected at the moment T6, the electronic device may restore display of the home screen 1101 at the moment T7.

In another embodiment, the moment T6 may alternatively be earlier than the moment T2, but later than a time point at which the SF receives the 2nd frame of VSYNC signal 2.

In another embodiment, if the moment T6 is later than the moment T2, and also later than a time point at which the SF receives the 3rd frame of VSYNC signal 2, the SF may first process corresponding display content based on the attribute parameter 3, to obtain the 3rd animation frame. After the 3rd frame is obtained, the attribute parameter set 1 is cleared. In this way, after the 4th frame of VSYNC signal 2 is received, the SF processes corresponding display content based on the attribute parameter x in the canceling notification 1, to obtain the end animation.

In some other embodiments, when the electronic device detects the operation that indicates to cancel the window animation, the electronic device may further display a continuous animation, so that a process of canceling the window animation is visually coherent to the user.

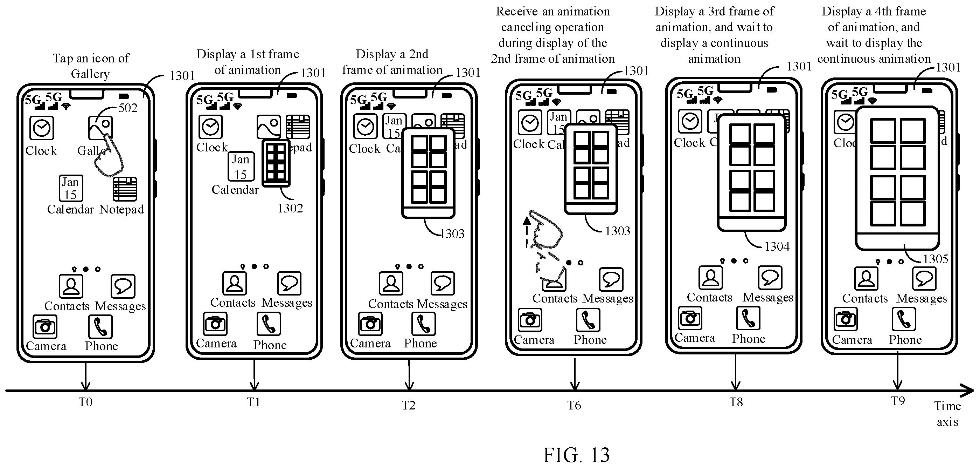

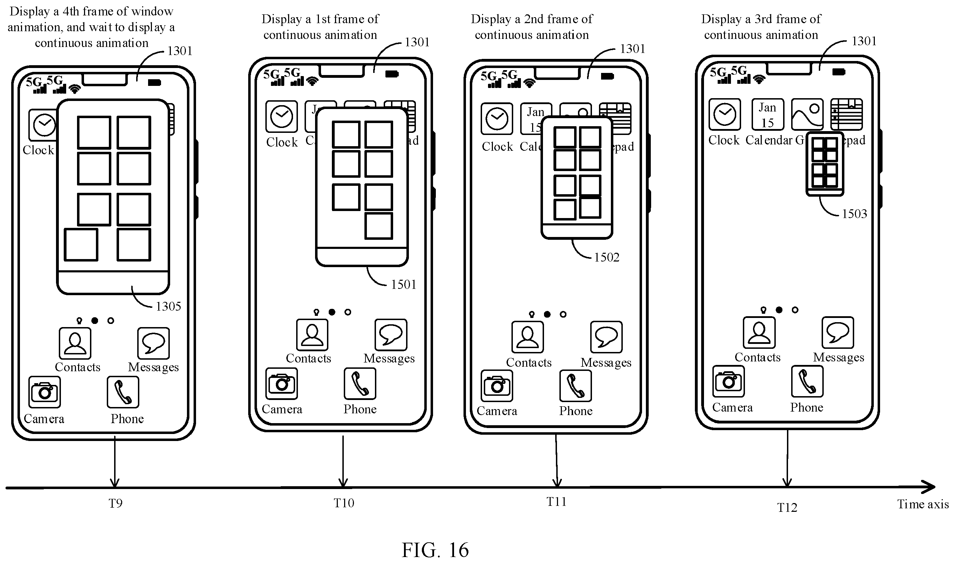

FIG. 13 and FIG. 16 show a second display process of canceling the window animation. FIG. 13 shows a scenario in which the operation of canceling the window animation is received during display of the window animation. FIG. 16 shows a scenario of a transition between the continuous animation and the window animation after the operation of canceling the window animation is detected.

Compared with the manner of canceling the window animation shown in FIG. 11, the second manner of canceling the window animation shown in FIG. 13 and FIG. 16 may make an animation canceling process visually more coherent.

As shown in FIG. 13, a home screen 1301 displayed by the electronic device includes an application icon 502 corresponding to the Gallery application. At a moment T0, the user taps a display area of the application icon 502 on the display screen, that is, taps a Gallery icon. Correspondingly, the electronic device may create and display a corresponding window animation in response to an operation that the user taps the application icon 502.

In this way, the home screen 1301 displays an animation frame 1302 with a first size between a moment T1~a moment T2, which may also be referred to as displaying a 1st frame of animation. The home screen 1301 displays an animation frame 1303 with a second size between the moment T2~a moment T8, which may also be referred to as displaying a 2nd frame of animation. At a moment T6 between the moment T2 and the moment T8, that is, during display of the 2nd frame of animation, the electronic device receives an operation that the user indicates to cancel starting of the Gallery application, for example, an upward slide operation, and may determine that an operation that indicates to cancel the window animation is detected.

In addition, in some embodiments, the electronic device may generate the continuous animation in response to the operation that indicates to cancel the window animation. Then, after detecting the operation that indicates to cancel the window animation, the electronic device may display the continuous animation instead of displaying the original window animation. The continuous animation may be used for a transition between a picture that displays the window animation and a picture that does not display the window animation, so that the process of canceling the window animation is visually coherent.

As shown in FIG. 13, after the moment T6, the electronic device may further display at least one frame of the original window animation. For example, between the moment T8 and a moment T9, the home screen 1301 displays an animation frame 1304 with a third size, namely, displays the 3rd frame of the window animation, and waits to complete a preparation for displaying the continuous animation, for example, generation of a continuation parameter. After the moment T9, the home screen 1301 displays an animation frame 1305 with a fourth size, namely, displays the 4th frame of the window animation, and waits to complete a preparation for displaying the continuous animation, for example, generation of the continuation parameter. The fourth size is greater than the third size. Then, the continuous animation is displayed. In this way, incoherence between the window animation and the continuous animation due to a poor connection time point can be improved.

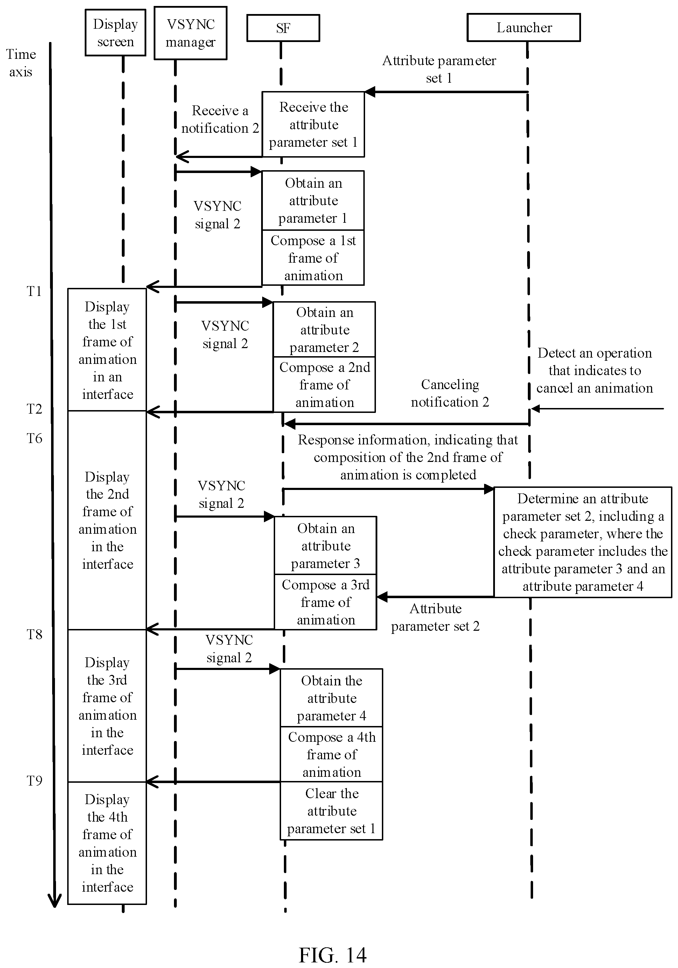

FIG. 14 shows a sequence of interaction between the SF and another software module in a window animation display scenario shown in FIG. 13.

As shown in FIG. 14, in an implementation, after S113, the main process of the SF sends the start notification 2 to the VSYNC manager. Then, the VSYNC manager may periodically send the VSYNC signal 2 to the main process of the SF in response to the start notification 2.

As shown in FIG. 14, when the SF receives the 1st frame of VSYNC signal 2 from the VSYNC manager, the attribute parameter 1 is determined from the attribute parameter set 1. Then, the corresponding display content is processed based on the attribute parameter 1, to obtain the 1st frame of animation, and compose the 1st frame of animation into the corresponding layer. After the 1st frame of animation is composed into the corresponding layer, the SF may send the 1st frame of animation to the display screen by using the display, to indicate the display screen to render a received animation frame on the screen. In this way, after the moment T1, the display screen of the electronic device may display the 1st frame of animation.

When receiving the 2nd frame of VSYNC signal 2 from the VSYNC manager, the SF determines the attribute parameter 2 from the attribute parameter set 1, and then processes the corresponding display content based on the attribute parameter 2, to obtain the 2nd frame of animation, and compose the 2nd frame of animation into the corresponding layer. After the 2nd frame of animation is composed into the corresponding layer, the SF may send the 2nd frame of animation to the display screen by using the display, to indicate the display screen to render a received animation frame on the screen. In this way, after the moment T2, the display screen of the electronic device may display the 2nd frame of animation.

As shown in FIG. 14, at the moment T6 after the moment T2, the Launcher detects the operation that indicates to cancel the window animation. In this scenario, the Launcher may generate a canceling notification 2, and send the canceling notification 2 to the SF. The SF sends response information to the Launcher in response to the canceling notification 2. The response information carries a frame sequence number of an animation frame most recently composed by the SF, for example, referred to as a target sequence number. For example, as shown in FIG. 14, the SF completes composition of the 2nd animation frame, and the frame sequence number carried in the response information is 2. In this way, the response information may indicate that the animation frame most recently composed by the SF is the 2nd frame.

Then, the Launcher may generate an attribute parameter set 2 corresponding to the continuous animation based on the target sequence number. The attribute parameter set 2 includes at least one frame of attribute parameter used for a check, for example, referred to as a check parameter, and a plurality of frames attribute parameters used to process display content, for example, a continuation parameter.

For example, the Launcher may use, as a check sequence number, at least one frame sequence number arranged after the target sequence number. Then, an attribute parameter indicated by the check sequence number is obtained from the attribute parameter set 1 and is used as a check parameter.

When there is only one check sequence number, a frame sequence number arranged preceding the check sequence number is determined as a start frame sequence number of the continuous animation. When there are a plurality of check sequence numbers, the plurality of check sequence numbers are consecutive sequence numbers, and a frame sequence number arranged preceding a largest check sequence number is determined as a start frame sequence number of the continuous animation.

After the start frame sequence number is determined, the Launcher may obtain an attribute parameter corresponding to the start frame sequence number from the attribute parameter set 1, and use the attribute parameter as a 1st continuation parameter. Then, another attribute parameter whose frame sequence number is less than the start frame sequence number in the attribute parameter set 1 is also used as a continuation parameter. In this way, the Launcher may obtain the attribute parameter set 2.

In addition, each continuation parameter in the attribute parameter set 2 also corresponds to one processing sequence number, and the processing sequence number indicates a sequence in which the SF obtains an attribute parameter from the attribute parameter set 2. When the processing sequence number is smaller, the attribute parameter can be obtained from the attribute parameter set 2 earlier. A processing sequence number corresponding to the start frame sequence number is the smallest. For another continuation parameter, when a corresponding frame sequence number in the attribute parameter set 1 is larger, a processing sequence number in the attribute parameter set 2 is smaller.

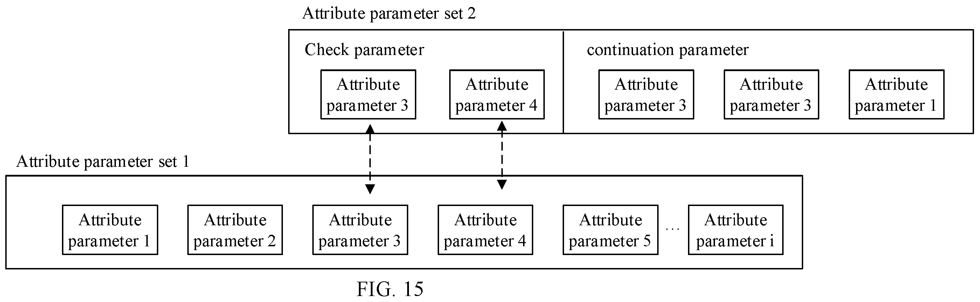

For example, as shown in FIG. 14, when the target sequence number is 2, 3 and 4 are determined as check sequence numbers. In this way, as shown in FIG. 15, check parameters corresponding to the attribute parameter set 2 include the attribute parameter 3 and the attribute parameter 4 in the attribute parameter set 1. In addition, 4 is a largest check sequence number, and 3 may be determined as an initial frame sequence number. In this case, in continuation parameters corresponding to the attribute parameter set 2, a 1st continuation parameter is the attribute parameter 3 in the attribute parameter set 1. In addition, the continuation parameters corresponding to the attribute parameter set 2 may further include the attribute parameter 2 and the attribute parameter 1. In the attribute parameter set 2, a processing sequence number of the attribute parameter 3 is 1, a processing sequence number of the attribute parameter 2 is 2, and a processing sequence number of the attribute parameter 1 is 3.

As shown in FIG. 14, after generating the attribute parameter set 2, the Launcher may send the attribute parameter set 2 to the SF. Certainly, when the Launcher generates the attribute set parameter 2, the SF continues to process corresponding display data based on the attribute parameter set 1. For example, before the SF stores the attribute parameter set 2, the SF has received the 3rd frame of VSYNC signal 2, and obtains the attribute parameter 3 from the attribute parameter set 1 in response to the VSYNC signal 2.

After the Launcher stores the attribute set parameter 2, whether a frame sequence number (for example, a sequence number b) of an attribute parameter most recently obtained by the SF from the attribute parameter set 1 is greater than a frame sequence number (for example, a sequence number c) corresponding to the check parameter is checked. When the sequence number b is greater than sequence numbers c of all check parameters, the SF clears the attribute parameter set 1, and then receives the VSYNC signal 2. The SF may process the display content based on the continuation parameter in the attribute parameter set 2, to compose a corresponding continuous animation.

When the sequence number b is not greater than a sequence number c of at least one check parameter, whether a sequence number b+1 is greater than the sequence numbers c corresponding to all the check parameters continues to be checked. If the sequence number b+1 is greater than the sequence numbers c of all the check parameters, the SF clears the attribute parameter set 1, and then receives the VSYNC signal 2. The SF may process the display content based on the continuation parameter in the attribute parameter set 2, to compose a corresponding continuous animation.

If the sequence number b+1 is not greater than the sequence number c of the at least one check parameter, when the SF receives the VSYNC signal 2, the SF may continue to obtain an attribute parameter b+1 from the attribute parameter set 1, and process corresponding display content, to obtain a (b+1)th frame of animation.

Then, whether the frame sequence number (for example, the sequence number b+1) of the attribute parameter most recently obtained by the SF from the attribute parameter set 1 is greater than the frame sequence number (for example, the sequence number c) corresponding to the check parameter is repeatedly checked, and whether to continue to obtain an attribute parameter from the attribute parameter set 1, whether to clear the attribute parameter set 1, and the like when the VSYNC signal 2 is received are repeatedly determined.

As shown in FIG. 14, a time point at which the SF stores the attribute parameter set 2 is before the moment T8, and the SF has obtained the attribute parameter 3 from the attribute parameter set 1 before storing the attribute parameter set 2.

In this scenario, the attribute parameter most recently obtained from the attribute parameter set 1 is the attribute parameter 3. It may be understood that a frame sequence number of the attribute parameter 3 is 3, the frame sequence number "3" is not greater than frame sequence numbers corresponding to check parameters (the attribute parameter 3 and the attribute parameter 4), and a frame sequence number "4" is not greater than a frame sequence number of a check parameter (the attribute parameter 4) either. In this way, after receiving the 4th frame of VSYNC signal 2, the SF obtains, from the attribute parameter set 1, the attribute parameter 4 indicated by the frame sequence number "4", and then processes the corresponding display content based on the attribute parameter 4, to obtain the 4th frame of animation.

In this way, the attribute parameter most recently obtained from the attribute parameter set 1 becomes the attribute parameter 4. A frame number "4" of the attribute parameter 4 is not greater than the frame number corresponding to the check parameter (the attribute parameter 4) either, but a frame number "5" is greater than frame sequence numbers of check parameters (the attribute parameter 3 and the attribute parameter 4). In this way, the SF may clear the attribute parameter set 1. When a 5th VSYNC signal 2 is received, the SF obtains a continuation parameter from the attribute parameter set 2, and processes corresponding display content, to obtain a continuous animation.

FIG. 16 shows a process of a transition between display of the window animation and display of the continuous animation in the process of canceling the window animation.

In some embodiments, as shown in FIG. 16, before a moment T10, the electronic device displays the 4th frame of animation frame of the window animation. From the moment T10 to a moment T11, the continuous animation 1501 with the third size is displayed, which may also be referred to as that a 1st frame of continuous animation is displayed. From the moment T11 to a moment T12, the continuous animation 1502 with the second size is displayed, which may also be referred to as that a 2nd frame of continuous animation is displayed. After the moment T12, the continuous animation 1503 with the first size is displayed, which may also be referred to as that a 3rd frame of continuous animation is displayed.

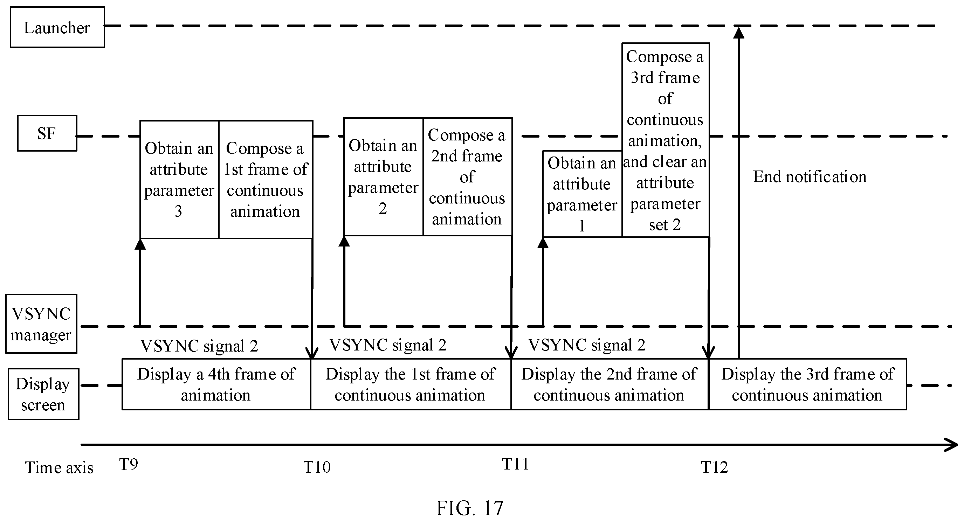

FIG. 17 shows a sequence of interaction between the SF and another software module in a window animation display scenario shown in FIG. 16.

As shown in FIG. 17, when the 5th VSYNC signal 2 is received, a continuation parameter (namely, the attribute parameter 3) indicated by the processing sequence number "1" is obtained from the attribute parameter set 2, and then corresponding display content is processed based on the attribute parameter 3, to obtain the 1st frame of continuous animation, and indicate, at the moment T10, the display screen to display the 1st frame of continuous animation.

When a 7th VSYNC signal 2 is received, a continuation parameter (namely, the attribute parameter 2) indicated by the processing sequence number "2" is obtained from the attribute parameter set 2, and then corresponding display content is processed based on the attribute parameter 2, to obtain the 2nd frame of continuous animation, and indicate, at the moment T11, the display screen to display the 2nd frame of continuous animation.

When an 8th VSYNC signal 2 is received, a continuation parameter (namely, the attribute parameter 1) indicated by the processing sequence number "3" is obtained from the attribute parameter set 2, and then corresponding display content is processed based on the attribute parameter 1, to obtain the 3rd frame of continuous animation, and indicate, at the moment T12, the display screen to display the 3rd frame of continuous animation. Then, the SF also sends an end notification to the Launcher, and the Launcher may clear the attribute parameter set 2 in response to the end notification. In addition, the SF may also clear the stored attribute parameter set 2. In this way, even if the window animation is canceled, the process of canceling the window animation can be ensured, and visual coherence of the user is ensured.

In the foregoing embodiments, a plurality of window animation implementation solutions are enumerated. The window animation implementation shown in FIG. 6 may be referred to as a native animation implementation. The window animation implementation shown in FIG. 8A and FIG. 8B~FIG. 14 may be referred to as a sinking animation implementation. In some embodiments, the initiator (for example, an application program or the window manager) of the window animation may decide to enable the native animation implementation or enable the sinking animation implementation based on a preconfigured service rule.

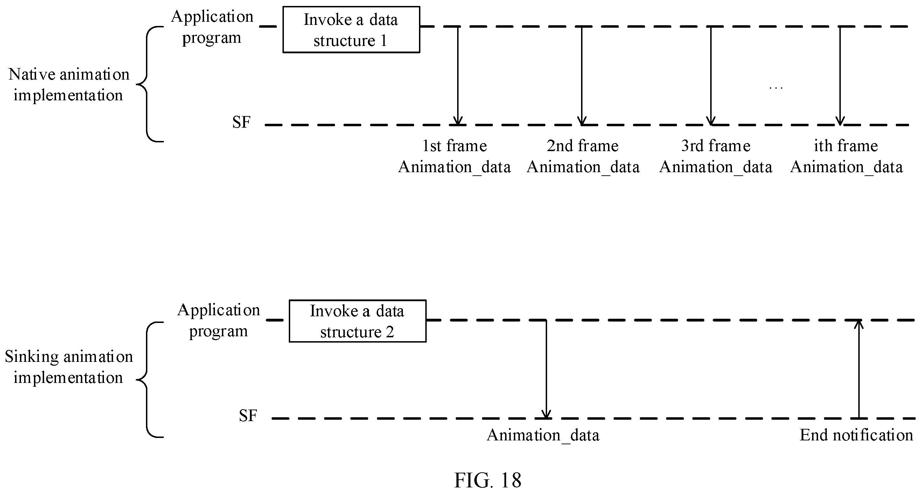

When the application program determines to use the native animation implementation to implement the window animation, a data structure 1 may be invoked. The data structure 1 indicates a native animation procedure in FIG. 18, to implement the window animation. The data structure 1 may be as follows:

```
         Animation Object{
            Animation_type_enum;
            Animation_data;
             Cancel(){...};
             Cancel(cancelData){...}
             Callback(){...}
             ... }
```

Animation Object may indicate a data structure. Animation _type_enum indicates a type of a window animation corresponding to the data structure, for example, an animation type of scaling up animation frames one by one, for another example, an animation type of scaling down animation frames one by one, for another example, an animation type of moving an animation frame in parallel.

Animation_data indicates an attribute parameter, and the like sent by the application program to the SF. It is specified in the data structure 1 that a frame of animation_data carries an attribute parameter corresponding to a single animation frame.

Cancel(){...} indicates a step required for canceling the window animation. Cancel(cancelData) {...} indicates data that needs to be sent to the SF after the window animation is cancelled, for example, including an attribute parameter of an end animation, for another example, including a continuation parameter of a continuous animation.

It may be understood that a model structure of the data structure 1 shown in the foregoing embodiments is only a model structure that may be enabled in an actual engineering implementation process, that is, is merely an example. In this embodiment of this application, specific details of the model structure of the data structure 1 are not specifically limited.

In addition, there may be a plurality of data structures 1. Different data structures 1 may correspond to different types of window animations.

When the application program determines to use the sinking animation implementation to implement the window animation, a data structure 2 may be invoked. The data structure 2 indicates a sinking animation procedure in FIG. 18, to implement the window animation. The data structure 2 is similar to the data structure 1. A difference lies in that it is specified in the data structure 2 that Animation_data indicates the application program to send an attribute parameter set to the SF, for example, the attribute parameter set 1 mentioned in the foregoing embodiments. In addition, in addition to the attribute parameter of the end animation, Cancel(cancelData){...} in the data structure 2 may further be an attribute parameter set including a plurality of continuation parameters, for example, the attribute parameter set 2 mentioned in the foregoing embodiments.

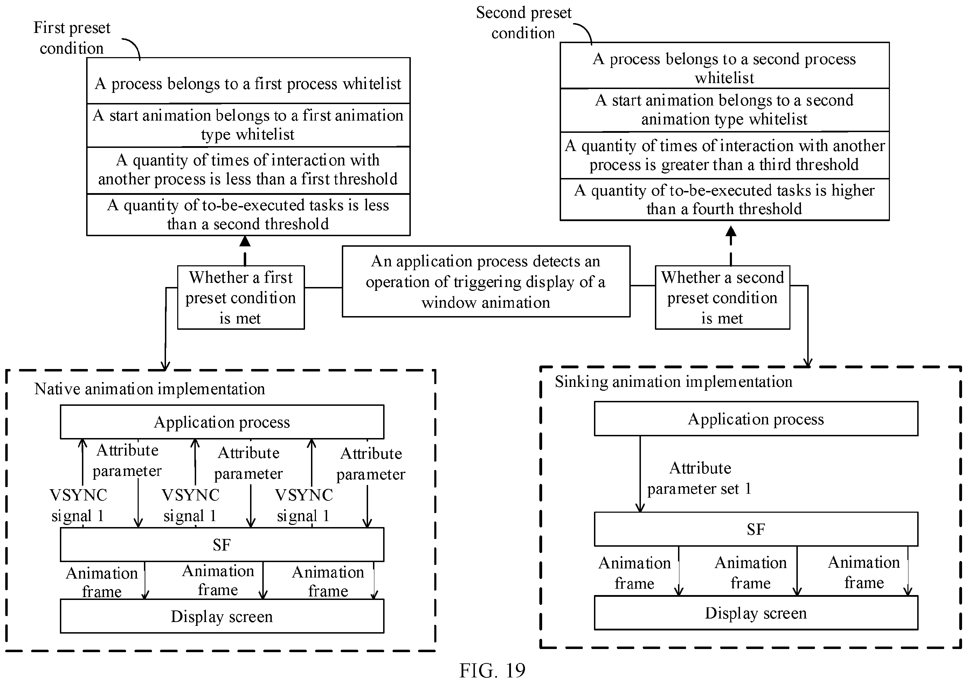

In some embodiments, as shown in FIG. 19, after receiving an operation that can trigger display of the window animation, an application process in the electronic device may determine whether the application process meets a preset condition. When the application process meets a first preset condition, a native animation implementation method (for implementation details, refer to FIG. 6) is used to implement display of the window animation. When the application process meets a second preset condition, a sinking animation implementation method (for implementation details, refer to FIG. 9A and FIG. 9B) is used to implement display of the window animation.

A manner of meeting the first preset condition includes one or more of the following:
(1) The application process belongs to a preconfigured first program whitelist. It may be understood that the native animation implementation method needs to be used for all processes that belong to the first program whitelist. The first program whitelist may be configured and updated by a developer.
(2) The application process identifies that a window animation type that needs to be enabled belongs to a first animation type whitelist. It may be understood that the native animation implementation method needs to be used for all window animation types that belong to the first animation type whitelist. The first animation type whitelist may be configured and updated by the developer.
(3) A frequency of interaction between the application process and another process within a unit of time is less than a first threshold. The first threshold is a preset empirical value. When the frequency of interaction is less than the first threshold, it may indicate that the application process is in an idle state. In this embodiment of this application, the first threshold that can be used to distinguish whether the application process is idle may be determined through an actual test.
(4) A quantity of to-be-executed tasks in a task queue of the application process is less than a second threshold.

In addition, the frequency of interaction between the application process and the another process within the unit of time being less than the first threshold and the quantity of to-be-executed tasks being less than the second threshold may both indicate that current load of the application process is relatively light, and it is suitable for enabling the native animation implementation method. It may be understood that another condition that can indicate that the current load of the application process is relatively light may also be used as the first preset condition. In another embodiment, if the data structure 1 is directly invoked in software code corresponding to the application process, it may also be considered that the first preset condition is met.

In addition, a manner of meeting the second preset condition includes one or more of the following:
(1) The application process belongs to a preconfigured second program whitelist. It may be understood that the sinking animation implementation method needs to be used for all processes that belong to the second program whitelist. The second program whitelist may be configured and updated by the developer.
(2) The application process identifies that a window animation type that needs to be enabled belongs to a second animation type whitelist. It may be understood that the sinking animation implementation method needs to be used for all window animation types that belong to the second animation type whitelist. The second animation type whitelist may be configured and updated by the developer.
(3) A frequency of interaction between the application process and another software module within a unit of time is not less than a third threshold. The third threshold is greater than the first threshold, and the third threshold is a preset empirical value. When the frequency of interaction is not less than the third threshold, it may indicate that the application process is in a busy state. In this embodiment of this application, the third threshold that can be used to distinguish whether the application process is busy may be determined through an actual test.
(4) A quantity of to-be-executed tasks in a task queue of the application process is greater than a fourth threshold. The fourth threshold is greater than the second threshold.

In addition, the frequency of interaction between the application process within the unit of time and the another software module being not less than the third threshold and the quantity of to-be-executed tasks being greater than the fourth threshold may both indicate that the current load of the application process is relatively heavy, and it is suitable for enabling the sinking animation implementation method. It may be understood that another condition that can indicate that the current load of the application process is relatively heavy may also be used as the second preset condition.

In another embodiment, if the data structure 2 is directly invoked in software code corresponding to the application process, it may also be considered that the second preset condition is met. In addition, when the first preset condition is not met, it may also be considered that the second preset condition is met.

In some possible embodiments, after the application process detects the operation of triggering display of the window animation, the electronic device may further predict, by using an artificial intelligence model, whether the application process is in the busy state during display of the window animation. For example, the artificial intelligence model may learn of historical running data of the application process, and identify a probability that the application process is busy, and the like after the application process receives an operation of triggering the window animation in different running scenarios. When the identified probability is greater than a specified probability threshold, the sinking animation implementation method is selected. When the identified probability is not greater than the specified probability threshold, the native animation implementation method is selected.

An embodiment of this application further provides an electronic device. The electronic device may include a memory and one or more processors. The memory is coupled to the processors. The memory is configured to store computer program code, and the computer program code includes computer instructions. When the processor executes the computer instructions, the electronic device may be enabled to perform the steps performed by the mobile phone in the foregoing embodiments. Certainly, the electronic device includes but is not limited to the memory and the one or more processors.

In some embodiments, the electronic device includes software modules such as a first program and an image composer. In addition, the electronic device may further include a hardware module such as a display.

In a running process of the electronic device, the first program detects a first operation (for example, the foregoing operation 1), and the first program sends first data (namely, the attribute parameter set 1) to the image composer. The first data includes r groups of animation parameters (for example, the attribute parameter 1~the attribute parameter i mentioned in the foregoing embodiments) used to compose a first animation (window animation), and the first animation may include a plurality of image frames (for example, the animation frame mentioned in the foregoing embodiments). A value corresponding to r may be equal to a total quantity i of frames of the first animation. In another embodiment, a value corresponding to r may alternatively be less than a total quantity i of frames, and is greater than 1.

In this way, after the image composer receives the first data, the image composer may independently complete composition of each image frame of the first animation, and indicate a display screen to sequentially display image frames of the first animation. In this way, a problem of high coupling between the image composer and the first program in a process of displaying the first animation can be alleviated, and a probability that a frame loss, stuttering, or the like occurs in a process of playing the first animation can be reduced to some extent.

In some embodiments, the first program determines a first quantity of frames of the first animation before the first program sends the first data to the image composer for one time.

For example, in the foregoing embodiments, a frame rate management module predicts a display screen refresh rate, namely, a first refresh rate during playing of the first animation. Then, a product of the first refresh rate and playing duration of the first animation is determined as the first quantity of frames.

Then, the first program may determine a plurality of groups of animation parameters of the first data. A quantity of the plurality of groups of animation parameters is the same as the first quantity of frames, and one group of the animation parameters is used to compose one image frame of the first animation. For a process of determining the animation parameter, refer to the process of determining the attribute parameter 1~the attribute parameter i with reference to the animation rule in the foregoing embodiments. Details are not described herein again.

In some embodiments, a refresh rate of the electronic device is fixed at the first refresh rate in a period in which the electronic device sequentially displays all the image frames corresponding to the first animation.

In some embodiments, the first data includes a first animation parameter, a second animation parameter, and a third animation parameter that are sorted sequentially. It may be understood that, animation parameters in the first data have arrangement attributes. For example, all animation parameters have frame sequence numbers, and the frame sequence numbers are arranged in ascending order. For another example, the first data may be a first in first out data stack. The first program may first determine an animation parameter of a 1st image frame of the first animation, and finally determine an animation parameter of a last image frame of the first animation; and each time one group of animation parameter is determined, write the group of animation parameter into the first data. In this way, animation parameters in the first data are orderly.

After the image composer receives the first data, the image composer receives a first vertical synchronization signal, and the image composer processes drawn first content based on the first animation parameter in response to the first vertical synchronization signal (a VSYNC signal 2), to obtain a first image frame of the first animation.

The image composer receives a second vertical synchronization signal. The second vertical synchronization signal is another VSYNC signal 2, and is a next frame of VSYNC signal 2 received by the image composer after the first vertical synchronization signal. The VSYNC signals 2 may be synchronization signals sent by a VSYNC manager at different time points. The image composer cannot completely miss none of VSYNC signals 2 sent by the VSYNC manager. In some scenarios, a receiving time interval (for example, a first time interval) between two adjacent frames of VSYNC signals 2 actually received by the image composer may be unequal to a sending time interval (for example, first duration) between the VSYNC signals 2. In addition, the first duration is fixed duration, and is used to indicate a sending frequency of a vertical synchronization signal.

When the first time interval is equal to the first duration, the image composer processes drawn second content based on the second animation parameter in response to the second vertical synchronization signal, to obtain a second image frame of the first animation. That the electronic device sequentially displays the image frames of the first animation further includes: displaying the first image frame after the first image frame is obtained; and displaying the second image frame after the second image frame is obtained. That is, the electronic device may sequentially display the first image frame and the second image frame in the process of displaying the first animation.

When the first time interval is greater than the first duration, the image composer processes drawn third content based on the third animation parameter in response to the second vertical synchronization signal, to obtain a third image frame of the first animation. That the electronic device sequentially displays the image frames of the first animation further includes: displaying the first image frame after the first image frame is obtained; and directly displaying the third image frame after the third image frame is obtained. In this way, in the process of displaying the first animation, the electronic device skips displaying the second image frame, and directly displays the third image frame. In this way, it can be ensured that the playing duration of the first animation is not affected by another factor.

In some embodiments, in a period in which the display screen of the electronic device sequentially displays the image frames of the first animation, the electronic device may respond to a second operation of a user, and the electronic device cancels display of the first animation. The second operation (for example, an upward slide operation in FIG. 11) is an operation of triggering canceling of display of the first animation. The electronic device displays a preconfigured end image frame (namely, an end animation).

In some embodiments, before the electronic device displays the preconfigured end image frame, the first program sends second data (for example, a canceling notification 1) to the image composer. The second data is an animation parameter used to compose the end image frame.

In some embodiments, in a period in which the display screen of the electronic device sequentially displays the image frames of the first animation, the electronic device cancels display of the first animation after detecting a second operation (for example, an upward slide operation in FIG. 13) of a user. The second operation is an operation of triggering canceling of display of the first animation. The electronic device displays a second animation (namely, a continuous animation). Before display of the first animation is canceled, when the first image frame, the second image frame, and the third image frame of the first animation are sequentially displayed, the second animation includes the third image frame, the second image frame, and the first image frame that need to be sequentially displayed.

In some embodiments, before the electronic device displays the second animation, the image composer of the electronic device receives third data (an attribute parameter set 2) from the first program. The third data includes a plurality of groups of animation parameters used to compose the second animation.

In some embodiments, the third data further includes a check parameter, the check parameter is the same as at least one group of animation parameters in the first data, and before the electronic device cancels display of the first animation, the image composer determines that a fourth image frame (for example, the animation frame 1305 in FIG. 16) is composed. The fourth image frame is an image frame composed based on a fourth animation parameter in the first data, and the fourth animation parameter includes an animation parameter the same as the check parameter.

In some embodiments, the animation parameters include one or a combination of a parameter indicating a display position, a parameter indicating a display size, and a parameter indicating a display contour.

In some embodiments, after a second program detects a third operation, the second program sends fourth data (for example, an attribute parameter 1) to the image composer. The fourth data is an animation parameter used to compose a fifth image frame (a 1st animation frame). The display screen of the electronic device displays the fifth image frame after the image composer receives the fourth data from the second program.

In some embodiments, the second program sends fifth data (for example, an attribute parameter 2) to the image composer. The fifth data is an animation parameter used to compose a sixth image frame (a 2nd animation frame). The display screen of the electronic device displays the sixth image frame after the image composer receives the fifth data from the second program.

The fifth image frame and the sixth image frame are two image frames of a third animation (for example, the window animation shown in FIG. 5), and the third operation is an operation that is detected by the second program and that is used to trigger display of the third animation.

In some embodiments, the second program is a program that meets a first preset condition, and the first program is a program that meets a second preset condition.

The first preset condition includes one or more of the following: the second program belongs to a preconfigured first program list (namely, a first program whitelist), a type that is of the third animation and that the second program indicates to display belongs to a first animation type list (namely, a first animation type whitelist), and a quantity of to-be-executed tasks corresponding to the second program is less than a first quantity (a second threshold).

The second preset condition includes one or more of the following: the first program belongs to a preconfigured second program list (namely, a second program whitelist), a type that is of the first animation and that the first program indicates to display belongs to a second animation type list (namely, a second animation type whitelist), a quantity of to-be-executed tasks corresponding to the first program is greater than a second quantity (a fourth threshold), and the first quantity is less than the second data.

An embodiment of this application further provides a chip system. The chip system may be applied to the electronic device in the foregoing embodiments. The chip system includes at least one processor and at least one interface circuit. The processor may be the processor in the electronic device. The processor and the interface circuit may be interconnected through a line. The processor may receive computer instructions from the memory of the foregoing electronic device through the interface circuit, and execute the computer instructions. When the computer instructions are executed by the processor, the electronic device is enabled to perform the steps performed by the mobile phone in the foregoing embodiments. Certainly, the chip system may further include other discrete components. This is not specifically limited in this embodiment of this application.

In some embodiments, it may be clearly understood by a person skilled in the art through descriptions of the foregoing implementations that for ease and brevity of description, division of the foregoing functional modules is merely taken as an example for description. In actual applications, the foregoing functions may be allocated to different functional modules for completion based on a requirement, that is, an internal structure of the apparatus is divided into different functional modules to complete all or some of the functions described above. For specific working processes of the system, apparatus, and unit described above, refer to corresponding processes in the method embodiments. Details are not described herein again.

In the embodiments of this application, functional units in the embodiments may be integrated into one processing unit, each of the units may exist alone physically, or two or more units may be integrated into one unit. The integrated unit may be implemented in the form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of the embodiments of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor to perform all or some of the steps of the methods described in the embodiments of this application. The storage medium includes any medium that can store program code, for example, a flash memory, a removable hard disk, a read-only memory, a random access memory, a magnetic disk, or an optical disc.

The foregoing descriptions are merely specific implementations of the embodiments of this application, but are not intended to limit the protection scope of the embodiments of this application. Any variation or replacement within the technical scope disclosed in the embodiments of this application shall fall within the protection scope of the embodiments of this application. Therefore, the protection scope of the embodiments of this application shall be subject to the protection scope of the claims.

## Claims

1. A window animation processing method, applied to an electronic device, wherein the method comprises:
sending, by a first program in the electronic device, first data to an image composer after detecting a first operation, wherein the first data comprises a plurality of groups of animation parameters used to compose a first animation, the first animation comprises a plurality of image frames, and the first operation is detected by the first program and is used to trigger display of the first animation; and
sequentially displaying, by a display screen of the electronic device, the image frames of the first animation after the image composer receives the first data.

2. The method according to claim 1, wherein before the first program sends the first data to the image composer for one time, the method further comprises:
determining, by the first program, a first quantity of frames of the first animation; and
determining, by the first program, the plurality of groups of animation parameters of the first data, wherein a quantity of the plurality of groups of animation parameters is the same as the first quantity of frames, and one group of the animation parameters is used to compose one image frame of the first animation.

3. The method according to claim 2, wherein before the electronic device determines the first quantity of frames of the first animation, the method further comprises:
determining, by the first program, a first refresh rate, wherein the first refresh rate is a predicted display screen refresh rate during playing of the first animation; and
the determining, by the first program, a first quantity of frames of the first animation comprises: determining that the first quantity of frames is equal to a product of the first refresh rate and playing duration of the first animation.

4. The method according to any one of claims 1-3, wherein a display screen refresh rate of the electronic device is fixed at the first refresh rate in a period in which the electronic device sequentially displays all the image frames corresponding to the first animation.

5. The method according to claim 1, wherein the first data comprises a first animation parameter, a second animation parameter, and a third animation parameter that are sorted sequentially, and after the image composer receives the first data, the method further comprises:
receiving, by the image composer, a first vertical synchronization signal;
processing, by the image composer, drawn first content based on the first animation parameter in response to the first vertical synchronization signal, to obtain a first image frame of the first animation;
receiving, by the image composer, a second vertical synchronization signal, wherein the second vertical synchronization signal is a next frame of vertical synchronization signal received by the image composer after the first vertical synchronization signal;
when a first time interval is equal to first duration, processing, by the image composer, drawn second content based on the second animation parameter in response to the second vertical synchronization signal, to obtain a second image frame of the first animation, wherein the first time interval is a time interval between a moment at which the first vertical synchronization signal is received and a moment at which the second vertical synchronization signal is received, and the first duration is fixed duration, and is used to indicate a sending frequency of the vertical synchronization signal; and the sequentially displaying, by the electronic device, the image frames of the first animation further comprises: displaying the first image frame after the first image frame is obtained; and displaying the second image frame after the second image frame is obtained; and
when the first time interval is greater than the first duration, processing, by the image composer, drawn third content based on the third animation parameter in response to the second vertical synchronization signal, to obtain a third image frame of the first animation, wherein the sequentially displaying, by the electronic device, the image frames of the first animation further comprises: displaying the first image frame after the first image frame is obtained; and after the third image frame is obtained, skipping the second image frame and directly displaying the third image frame.

6. The method according to claim 1, wherein in a period in which the display screen of the electronic device sequentially displays the image frames of the first animation, the method further comprises:
canceling, by the display screen of the electronic device, display of the first animation in response to a second operation of a user, wherein the second operation is an operation of triggering canceling of display of the first animation; and
displaying, by the display screen of the electronic device, a preconfigured end image frame.

7. The method according to claim 6, wherein before the displaying, by the electronic device, a preconfigured end image frame, the method further comprises:
sending, by the first program, second data to the image composer, wherein the second data is an animation parameter used to compose the end image frame.

8. The method according to claim 1, wherein in a period in which the display screen of the electronic device sequentially displays the image frames of the first animation, the method further comprises:
canceling, by the display screen of the electronic device, display of the first animation after a second operation of a user is detected, wherein the second operation is an operation of triggering canceling of display of the first animation; and
displaying, by the display screen of the electronic device, a second animation, wherein before the canceling display of the first animation, when a first image frame, a second image frame, and a third image frame of the first animation are sequentially displayed, the second animation comprises the third image frame, the second image frame, and the first image frame that need to be sequentially displayed.

9. The method according to claim 8, wherein before the displaying, by the display screen of the electronic device, a second animation, the method further comprises:
receiving, by the image composer of the electronic device, third data from the first program, wherein the third data comprises a plurality of groups of animation parameters used to compose the second animation.

10. The method according to claim 9, wherein the third data further comprises a check parameter, the check parameter is the same as at least one group of animation parameters in the first data, and before the canceling, by the display screen of the electronic device, display of the first animation, the method further comprises:
determining, by the image composer, that a fourth image frame is composed, wherein the fourth image frame is an image frame composed based on a fourth animation parameter in the first data, and the fourth animation parameter comprises an animation parameter the same as the check parameter.

11. The method according to any one of claims 1-10, wherein each group of animation parameters comprises one or a combination of a parameter indicating a display position, a parameter indicating a display size, and a parameter indicating a display contour.

12. The method according to any one of claims 1-11, wherein the method further comprises:
sending, by a second program of the electronic device, fourth data to the image composer after detecting a third operation, wherein the fourth data is an animation parameter used to compose a fifth image frame;
displaying, by the display screen of the electronic device, the fifth image frame after the image composer receives the fourth data from the second program;
sending, by the second program of the electronic device, fifth data to the image composer, wherein the fifth data is an animation parameter used to compose a sixth image frame; and
displaying, by the display screen of the electronic device, the sixth image frame after the image composer receives the fifth data from the second program, wherein
the fifth image frame and the sixth image frame are two image frames of a third animation, and the third operation is an operation that is detected by the second program and that is used to trigger display of the third animation.

13. The method according to claim 12, wherein the second program is a program that meets a first preset condition, and the first program is a program that meets a second preset condition;
the first preset condition comprises one or more of the following: the second program belongs to a preconfigured first program list, a type that is of the third animation and that the second program indicates to display belongs to a first animation type list, and a quantity of to-be-executed tasks corresponding to the second program is less than a first quantity; and
the second preset condition comprises one or more of the following: the first program belongs to a preconfigured second program list, a type that is of the first animation and that the first program indicates to display belongs to a second animation type list, a quantity of to-be-executed tasks corresponding to the first program is greater than a second quantity, and the first quantity is less than the second data.

14. An electronic device, wherein the electronic device comprises one or more processors and a memory, the memory is coupled to the processor, the memory is configured to store computer program code, the computer program code comprises computer instructions, and when the one or more processors execute the computer instructions, the one or more processors are configured to perform the method according to any one of claims 1-13.

15. A computer storage medium, comprising computer instructions, wherein when the computer instructions are run on an electronic device, the electronic device is enabled to perform the method according to any one of claims 1-13.
